# EUROPEAN PATENT APPLICATION

(11) **EP 3 151 114 A1**
(43) Date of publication of application: **05.04.2017**
(21) Application number: 16189414.2
(22) Date of filing: 19.09.2016
(51) Int. Cl.: G06F 9/44, G06F 21/57

(54) **SOFTWARE DEVELOPMENT SYSTEM IN SYSTEM DEVELOPMENT BASED ON MODEL-BASED METHOD**

(30) Priority: 29.09.2015 JP 2015192242; 07.06.2016 JP 2016113938
(71) Applicant: Panasonic Intellectual Property Management Co., Ltd., Osaka-shi, Osaka 540-6207 (JP)
(72) Inventor: KURAUCHI, Nobukazu, Osaka-shi, Osaka 540-6207 (JP); ABE, Toshihisa, Osaka-shi, Osaka 540-6207 (JP)
(74) Representative: Grünecker Patent- und Rechtsanwälte PartG mbB

(57) **Abstract**

A software development system provided with: a threat database which retains data indicating one or more threats that are factors that cause risks in information security to occur; and a threat analysis tool unit which, with regard to individual elements of a control model which is created from design information for a development target by a model-based development system and simulates the development target, extracts data of corresponding threats from the threat database to thereby create and output threat list data that indicates a plurality of threats for the control model.

## Description

### BACKGROUND

### 1. Technical Field

The present disclosure relates to a software development system and a computer-readable non-transitory recording medium having a program recorded thereon, in system development that is based on the model-based method.

### 2. Description of the Related Art

System development that is based on the model-based method (hereinafter, referred to as model-based development) is a known method for system development (for example, Japanese Unexamined Patent Application Publication No. 2004-280786). In model-based development, an executable control model is created from specifications such as design information. In model-based development, the validity of specifications such as design information can be verified by performing a simulation on the basis of a created control model. Furthermore, it is possible to automatically generate source code from a created control model and create an executable module.

In this way, in model-based development, the validity of specifications can be verified at an upstream stage of development, before an executable module is generated, in other words, before code is implemented in a product, and it is therefore known that development efficiency can be improved.

Furthermore, in the field of information systems, it is important to take countermeasures against "risks" in information security that may damage or affect a developed system.

In this regard, devices and the like for assessing security threats (hereinafter, referred to as threats) constituting factors that cause risks in information security to occur have been proposed (for example, Japanese Unexamined Patent Application Publication No. 2015-41167). Japanese Unexamined Patent Application Publication No. 2015-41167 discloses an invention that automatically calculates a threat risk value from design information.

### SUMMARY

However, further improvement is required in the abovementioned prior art.

In one general aspect, the techniques disclosed here feature a software development system provided with: a threat database which retains data indicating one or more threats that are factors that cause risks in information security to occur; and circuitry which, in operation, with regard to individual elements of a control model which is created from design information for a development target by a development system handling executable models and is an executable model in which the development target is simulated, extracts data of corresponding threats from the threat database to thereby create and output data for a threat list that indicates a plurality of threats for the control model.

According to the present disclosure, it is possible to realize a software development system and the like with which development efficiency in system development that is based on the model-based method can be improved.

It should be noted that these general or specific aspects may be realized by a method, an integrated circuit, a computer program, or a recording medium such as a computer-readable CD-ROM, and may be realized by an arbitrary combination of a system, method, an integrated circuit, a computer program, and a recording medium.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a configuration diagram depicted on the basis of the flow of data in a software development system according to embodiment 1;
Fig. 2 is a flowchart depicting an overview of all of the processing of the software development system according to embodiment 1;
Fig. 3 is a configuration diagram of an in-vehicle system that is an example of a development target;
Fig. 4 is a system configuration diagram of the in-vehicle system depicted in Fig. 3;
Fig. 5A is a diagram for illustrating an example of a granularity conversion according to embodiment 1;
Fig. 5B is a diagram depicting an example of a block diagram for illustrating a method in which a granularity conversion unit according to embodiment 1 performs grouping automatically;
Fig. 5C is a diagram depicting an example of a block diagram for illustrating a method in which a granularity conversion unit according to embodiment 1 performs grouping automatically;
Fig. 5D is a flowchart depicting an example of processing in which a granularity conversion unit according to embodiment 1 performs grouping automatically;
Fig. 5E is a flowchart depicting an example of processing in which a granularity conversion unit according to embodiment 1 performs grouping automatically;
Fig. 6 is a diagram depicting a data flow diagram used to express a threat model;
Fig. 7 is a diagram depicting a database for a control model containing information on a trust boundary depicted in Fig. 6;
Fig. 8 is a flowchart depicting processing for creating a control model according to embodiment 1;
Fig. 9A is a diagram for illustrating an operation for when a trust boundary is set for a control model;
Fig. 9B is a diagram for illustrating an operation for when a trust boundary is set for a control model;
Fig. 10 is a flowchart depicting processing for a trust boundary setting operation;
Fig. 11 is a diagram depicting an example of data retained by a threat database according to embodiment 1;
Fig. 12 is a diagram depicting an example of threat list data according to embodiment 1;
Fig. 13 is a flowchart depicting processing for creating threat list data according to embodiment 1;
Fig. 14A is a diagram depicting a data flow diagram for a control model in which feedback has been implemented on the basis of a threat list according to embodiment 1;
Fig. 14B is a diagram depicting a database for a control model in which feedback has been implemented on the basis of a threat list according to embodiment 1;
Fig. 15 is a diagram depicting a system development procedure according to a V-shaped model in embodiment 1;
Fig. 16 is a configuration diagram depicted on the basis of the flow of data in a software development system according to embodiment 2;
Fig. 17 is a flowchart depicting a processing overview of the software development system according to embodiment 2;
Fig. 18 is a diagram depicting an example of data retained by a countermeasure database according to embodiment 2;
Fig. 19 is a diagram depicting an example of countermeasure list data according to embodiment 2;
Fig. 20 is a flowchart depicting creation processing of a countermeasure list creation tool unit according to embodiment 2;
Fig. 21 is a flowchart depicting processing for reflecting a countermeasure list in a control model;
Fig. 22 is a configuration diagram depicted on the basis of the flow of data in a software development system according to embodiment 3;
Fig. 23 is a flowchart depicting a processing overview of the software development system according to embodiment 3;
Fig. 24 is a diagram depicting an example of data retained by an attack database according to embodiment 3;
Fig. 25 is an example of attack list data according to embodiment 3;
Fig. 26 is a flowchart depicting creation processing of an attack list creation tool unit according to embodiment 3;
Fig. 27 is a diagram depicting an example of a control model to which an attack simulation function has been added according to embodiment 3;
Fig. 28A is a diagram depicting an example of the case where a countermeasure is implemented on the control model depicted in Fig. 27;
Fig. 28B is a diagram depicting a database of the control model depicted in Fig. 28A;
Fig. 29 is a diagram depicting a portion of the format of a CAN message;
Fig. 30 is a diagram depicting a system development procedure according to a V-shaped model in embodiment 3; and
Fig. 31 is a diagram depicting a system development procedure according to a V-shaped model.

### DETAILED DESCRIPTION

### (Findings Forming Basis of the Present Disclosure)

Hereinafter, the findings forming the basis for the present disclosure will be described.

As disclosed in Japanese Unexamined Patent Application Publication No. 2004-280786, for example, by implementing system development by means of model-based development, specifications can be verified at an upstream stage of development and development efficiency can be improved.

Furthermore, an assessment device disclosed in Japanese Unexamined Patent Application Publication No. 2015-41167, for example, automatically calculates a risk value for a threat by defining the data necessary for risk assessment in accordance with an input instruction of a tool on the basis of information that can be objectively input such as design specifications.

However, threat assessment and model-based development are conducted independently from each other. Therefore, even when a threat assessment (threat analysis) is carried out at an upstream stage of system development and reflected in the system design, assuring that a security countermeasure operates correctly depends on a vulnerability assessment at a downstream stage.

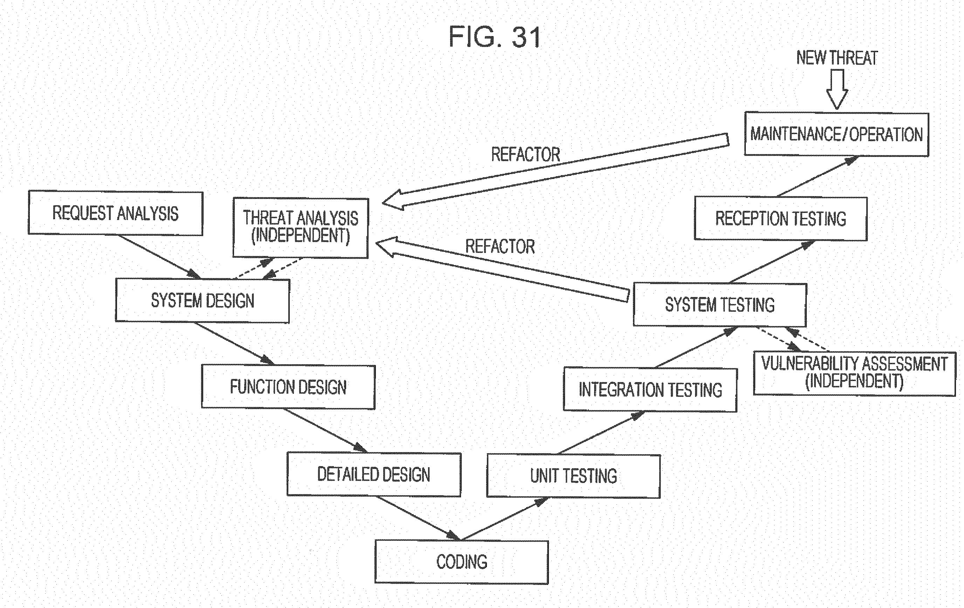

Fig. 31 is a diagram depicting a system development procedure according to a V-shaped model.

As depicted in Fig. 31, a vulnerability assessment is generally carried out at the system testing stage, which is closer to being an actual product. However, in the case where a vulnerability is discovered in a vulnerability assessment or in the case where an unexpected new threat is found after system testing, it is necessary to once again carry out a threat analysis, and repeat the procedure from system design to system testing. That is, in the case where a vulnerability is found in a downstream stage, it is necessary to provide feedback to upstream stages and design/implementation and to repeat the procedure, and therefore considerable refactoring occurs in the development work, and as a result, there is a problem in that development efficiency cannot be improved. In addition, when there are restrictions such as development costs and deadlines, cases may arise where a complete countermeasure cannot be implemented with respect to a newly found threat and a product is dispatched with the countermeasure remaining incomplete.

Therefore, in order to improve development efficiency, further improvement is required rather than simply carrying out a threat analysis at an upstream stage of system development and reflecting such in the system design.

In light of the above circumstances, the present inventor provides a software development system and the like with which it is possible to improve development efficiency in system development that is based on the model-based method.

A software development system according to one form of the present disclosure is provided with: a threat database which retains data indicating one or more threats that are factors that cause risks in information security to occur; and circuitry which, in operation, with regard to individual elements of a control model which is created from design information for a development target by a development system handling executable models and is an executable model in which the development target is simulated, extracts data of corresponding threats from the threat database to thereby create and output data for a threat list that indicates a plurality of threats for the control model.

According to this configuration, it is possible to improve development efficiency in system development that is based on the model-based method.

Here, for example, the development system handling executable models is a model-based development system.

Furthermore, for example, in the software development system, the circuitry may be provided with a countermeasure database that retains data of countermeasure means for each of the one or more threats, extract the countermeasure means for each of the plurality of threats included in the data for the threat list from the countermeasure database to thereby create and output data for a countermeasure list indicating a list of the countermeasure means for the control model, and output the data for the countermeasure list to the development system handling executable models to thereby cause the development system handling executable models to reflect the countermeasure list in the control model.

Furthermore, for example, the software development system may be further provided with an attack database that retains data of one or more attacks on information security, in which the circuitry may, with regard to the individual elements making up the control model, extract data of corresponding attacks from the attack database to thereby create and output data for an attack list indicating a plurality of the attacks on the control model, and output the data for the attack list to the development system handling executable models to thereby cause the development system handling executable models to reflect the attack list in the contract model and perform a simulation to assess source code of the control model in which the attack list has been reflected.

Furthermore, for example, in the software development system, the circuitry may have the control model created by the development system handling executable models input thereto, group a plurality of the elements making up the input control model in such a way that a predetermined granularity is implemented, and set incoming/outgoing connections of a dataflow for the plurality of grouped elements to thereby output the plurality of grouped elements as the individual elements of the control model.

Furthermore, for example, the circuitry may, as the predetermined granularity, group the plurality of elements in such a way as to form a plurality of elements that are not connected to elements to be protected as information assets and a plurality of elements that are connected to the elements to be protected as the information assets.

Furthermore, for example, the circuitry may, as the predetermined granularity, group the plurality of elements in such a way that pattern matching is performed using a design pattern corresponding to a predetermined element type, and a specific element matching the design pattern serves as a group boundary.

Furthermore, for example, the predetermined granularity may be a preset upper value for a number of times that grouping is to be performed, and the circuitry may group a plurality of elements included in a block diagram until reaching the preset upper value for the number of times that grouping is to be performed.

Furthermore, for example, the individual elements of the control model created by the development system handling executable models may have trust boundary information indicating whether the individual elements are inside or outside of a trust boundary for security, and the circuitry may determine whether the individual elements are inside or outside of the trust boundary, based on the trust boundary information possessed by the individual elements of the control model created by the development system handling executable models, and use data of the threats for the elements that are outside of the trust boundary from among the data of the corresponding threats extracted from the threat database, to create and output the data for the threat list indicating the plurality of threats for the control model.

Here, for example, the model-based development system may create the control model from the design information, generate source code from the created control model, perform a simulation to assess the generated source code, and cause the control model to be revised by feeding an assessment result for the source code back to the control model.

Furthermore, a non-transitory recording medium according to one form of the present disclosure is a computer-readable non-transitory recording medium having recorded thereon a program that performs a threat analysis for a control model which is created from design information for a development target by a development system handling executable models and is an executable model in which the development target is simulated, the program, when executed by a processor, causing the processor to execute a method including: with regard to individual elements of the control model created by the development system handling executable models, extracting data of corresponding threats from a threat database that retains data of one or more threats that are factors that cause risks in information security to occur, and thereby creating and outputting data for a threat list indicating a plurality of threats for the control model.

Furthermore, for example, the method may further include: inputting of the control model created by the development system handling executable models, and grouping a plurality of the elements included in a block diagram expressing the input control model, in such a way that a predetermined granularity is implemented; and setting incoming/outgoing connections of a dataflow for the plurality of grouped elements, and thereby outputting the plurality of grouped elements as the individual elements of the control model.

Furthermore, for example, the individual elements of the control model created by the development system handling executable models may have trust boundary information indicating whether the individual elements are inside or outside of a trust boundary for security, and the method may further include: setting information indicating whether the individual elements are inside or outside of the trust boundary, in each of the plurality of grouped elements.

Furthermore, for example, the individual elements of the control model created by the development system handling executable models may have the trust boundary information indicating whether the individual elements are inside or outside of the trust boundary for security, and the method may further include: acquiring the individual elements of the control model created by the development system handling executable models; comparing the acquired individual elements of the control model and each of the one or more threats retained in the threat database to extract the data of the corresponding threats from the threat database; determining whether the individual elements are inside or outside of the trust boundary, based on the trust boundary information possessed by the individual elements of the control model created by the development system handling executable models; and using data of the threats for the elements that are outside of the trust boundary from among the data of the corresponding threats extracted from the threat database, to create and output the data for the threat list indicating the plurality of threats for the control model.

The embodiments described hereinafter all represent specific examples of the present disclosure. The numerical values, the shapes, the constituent elements, the steps, the order of steps, and the like given in the following embodiments are examples and are not intended to restrict the present disclosure. Furthermore, from among the constituent elements in the following embodiments, constituent elements that are not described in the independent claims indicating the most significant concepts are described as optional constituent elements. Furthermore, in all of the embodiments, it is also possible to combine the respective content thereof.

### (Embodiment 1)

Hereafter, a software development system and the like in embodiment 1 will be described with reference to the drawings.

### [Configuration of Software Development System 1]

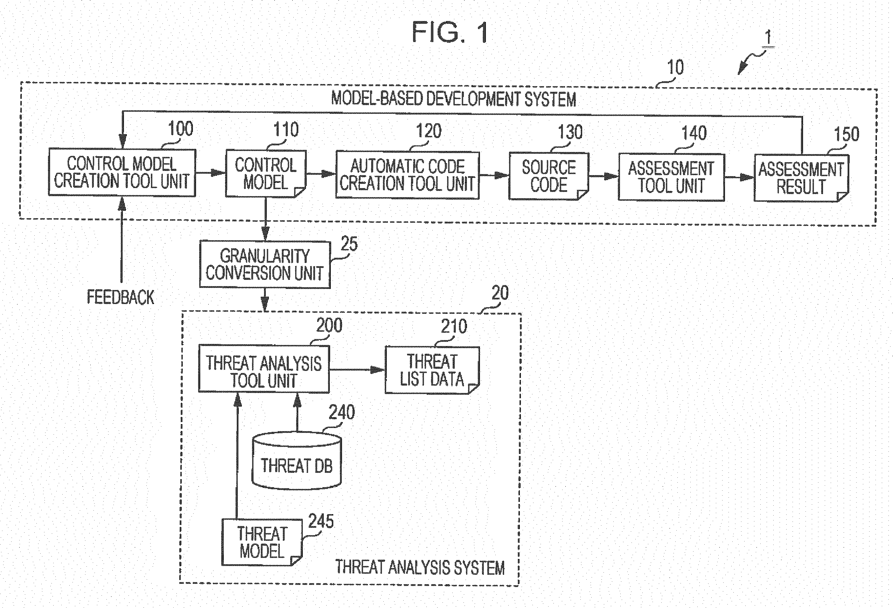

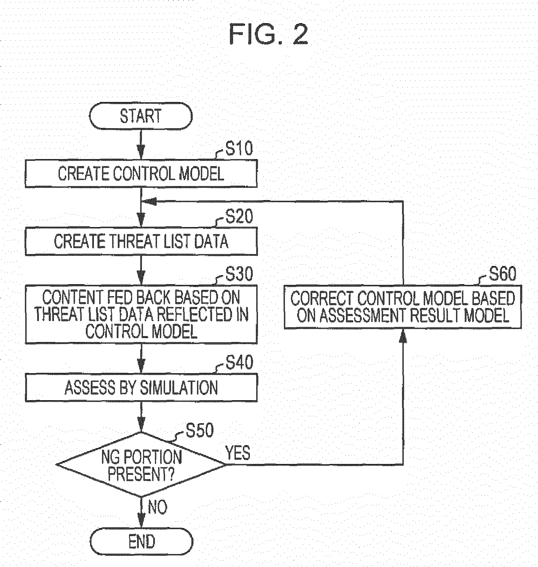

Fig. 1 is a configuration diagram depicted on the basis of the flow of data in a software development system 1 according to embodiment 1. Fig. 2 is a flowchart depicting an overview of all of the processing of the software development system 1 according to embodiment 1.

The software development system 1 is provided with a model-based development system 10, a threat analysis system 20, and a granularity conversion unit 25. The software development system 1 operates on a computer such as a personal computer, and is operated by a user of the software development system 1 with information necessary for development being input thereto. In Fig. 1, the way in which the model-based development system 10 and the threat analysis system 20 operate while cooperating with each other is depicted on the basis of the flow of data. It should be noted that the software development system 1 is not restricted to the case where the model-based development system 10 is included and may be a development system that handles executable models; however, hereinafter, the case where the model-based development system 10 is included is described as an example.

### [Model-Based Development System 10]

The model-based development system 10 depicted in Fig. 1 is provided with a control model creation tool unit 100, an automatic code generation tool unit 120, and an assessment tool unit 140.

The control model creation tool unit 100 creates a control model from design information. More specifically, the control model creation tool unit 100 has information for creating a control model 110, namely a model in which a development target is simulated, input thereto by means of a user operation, and creates the control model 110 from the input information.

In the present embodiment, the control model creation tool unit 100 has input thereto, by means of user operations, elements that are necessary for control model simulation, input/output for the each element, dataflow, and the like from system design specifications and so forth, and also information and the like regarding trust boundaries and grouping that is necessary for a threat analysis to be performed by the threat analysis system 20. The control model creation tool unit 100 then creates the control model 110, which is expressed by means of a block diagram made up of the four basic arithmetic operations, differentiation/integration, conditional expressions, iteration, and the like, from the input information. It should be noted that the information regarding trust boundaries and grouping that is necessary for the threat analysis to be performed by the threat analysis system 20 and the like may be input automatically by the granularity conversion unit rather than the control model creation tool unit 100. Furthermore, the information regarding trust boundaries and grouping that is necessary for the threat analysis to be performed by the threat analysis system 20 and the like may be input by the threat analysis system 20 by means of a user operation. Furthermore, the control model 110 stores information regarding the flow of data, described using a data flow diagram (DFD).

Furthermore, the control model creation tool unit 100 revises the created control model 110 and reflects (feeds back) content that is based on threat list data 210 in the control model 110, on the basis of an assessment result produced by the assessment tool unit 140, by means of a user operation. Here, reflecting content in the control model 110 means revising the control model 110 in such a way that a countermeasure for a threat is implemented therein. The details thereof are described later.

The automatic code generation tool unit 120 generates source code from the control model 110 created by the control model creation tool unit 100. More specifically, the automatic code generation tool unit 120 generates executable source code 130 from the control model 110 created by the control model creation tool unit 100. In the present embodiment, the source code 130 includes the source code for a program for a development target (a device, module, or the like that is the development target).

The assessment tool unit 140 performs a simulation to assess the source code generated by the automatic code generation tool unit 120. The assessment tool unit 140 feeds the assessment result back to the control model creation tool unit 100 to thereby cause the control model creation tool unit 100 to revise the control model 110. In the present embodiment, the assessment tool unit 140 performs a simulation to execute the source code generated by the automatic code generation tool unit 120, examines the operation of the source code for functions of the development target, and outputs an assessment result 150 that includes whether or not the development target has operated appropriately.

### [Granularity Conversion Unit 25]

The granularity conversion unit 25 depicted in Fig. 1 converts (groups) a plurality of elements included in the control model 110 created by the control model creation tool unit 100 into a granularity appropriate for a threat analysis by the threat analysis system 20. The granularity conversion unit 25 outputs the control model 110 including the plurality of grouped elements to the threat analysis system 20. This is because, if the control model 110 is output to the threat analysis system 20 as it is and used for a threat analysis, the threat analysis granularity is small and a very large number of threats are extracted. That is, if the threat analysis granularity is small, the feedback to the control model creation tool unit 100 is no longer realistic.

In the present embodiment, the granularity conversion unit 25 has the control model 110 created by the model-based development system 10 input thereto, and groups the plurality of elements making up the input control model 110 so as to achieve a prescribed granularity. The granularity conversion unit 25 sets incoming/outgoing connections of the dataflow for the plurality of grouped elements to thereby output the plurality of grouped elements to the threat analysis system 20 as individual elements of the control model 110.

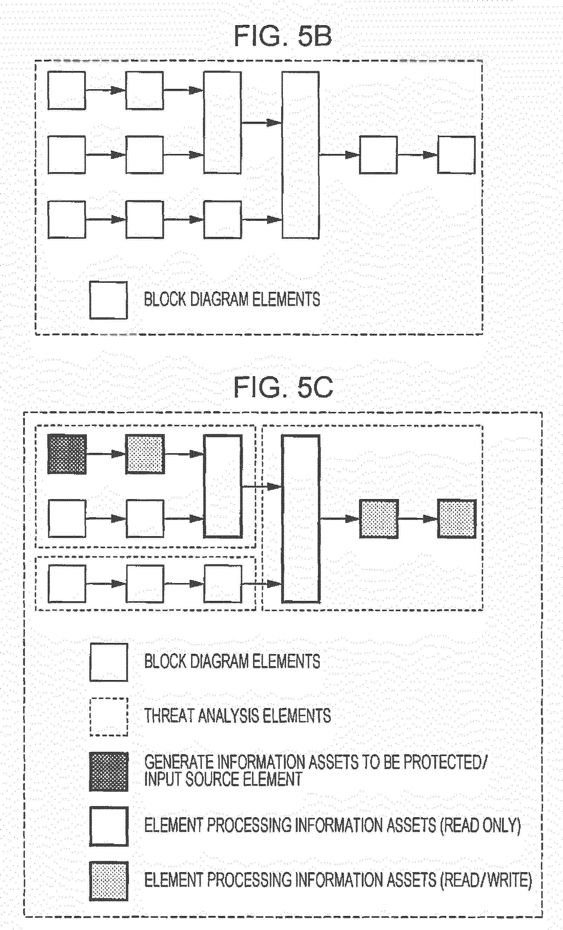

For example, the granularity conversion unit 25, as the predetermined granularity, may group the plurality of elements so as to form a plurality of elements that are not connected to elements to be protected as information assets and a plurality of elements that are connected to elements to be protected as information assets. Furthermore, for example, the granularity conversion unit 25, as the predetermined granularity, may group the plurality of elements in such a way that pattern matching is performed using a design pattern corresponding to a predetermined element type and a specific element matching the design pattern serves as a group boundary. It should be noted that examples of a design pattern are the group surrounded by the dashed line in the upper left of Fig. 5C described later on and the group surrounded by the dashed line in the right half of the diagram. Furthermore, if a specific element appears, the granularity conversion unit 25 may set the specific element as a group boundary. Here, a specific element, for example, is a module connected to an external network such as a gateway and is where a trust boundary is generally drawn. Furthermore, for example, the prescribed granularity may be a preset upper value for the number of times that grouping is to be performed. In this case, the granularity conversion unit 25 preferably groups the plurality of elements until reaching the preset upper value for the number of times that grouping is to be performed.

It should be noted that the individual elements of the control model 110 created by the model-based development system 10 have trust boundary information indicating whether the individual elements are inside or outside of a trust boundary for security. Therefore, the granularity conversion unit 25 may set information indicating whether inside or outside of a trust boundary, for each of the plurality of grouped elements.

### [Threat Analysis System 20]

The threat analysis system 20 depicted in Fig. 1 is provided with a threat analysis tool unit 200 and a threat database (DB) 240.

The threat DB 240 is a database that retains data of one or more threats which are factors that cause risks in information security to occur. In the present embodiment, the types of threats and the conditions under which the threats occur are stored in the threat DB 240.

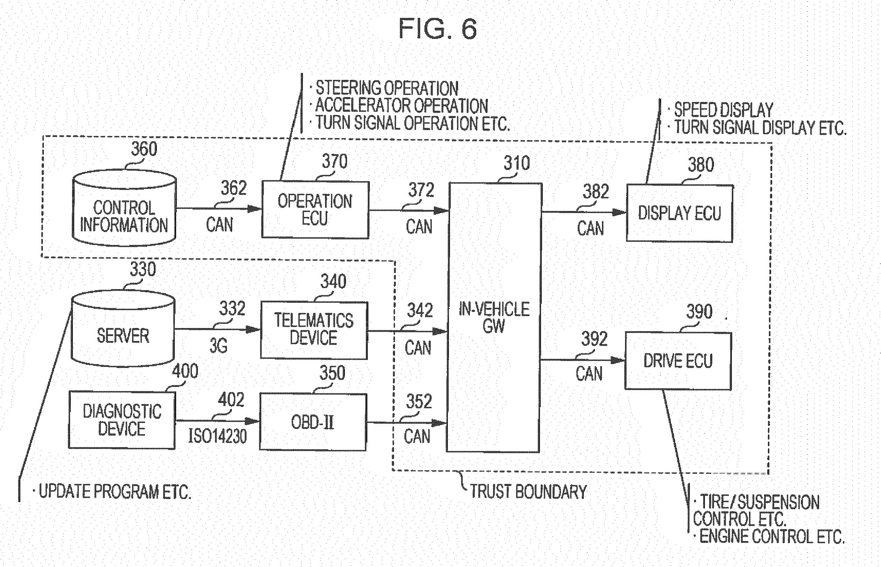

A threat model 245 is expressed by means of the DFD in Fig. 6 described later on and the threat DB 240, and, for example, is the result of investigating the kind of security threats to which the development target is exposed and whether there is a possibility that the development target may be attacked.

The threat analysis tool unit 200, with regard to the individual elements of the control model 110, extracts data of corresponding threats from the threat DB 240 to thereby create and output data for a threat list that indicates a plurality of threats for the control model 110. Here, the control model 110 is created from design information of the development target by the model-based development system 10 for carrying out model-based development, and simulates the development target.

More specifically, the threat analysis tool unit 200 analyses vulnerabilities for the control model 110 and outputs data for the threat list (threat list data 210), with the threat model 245 as output of the granularity conversion unit 25 and the threat model 245 and the threat DB 240 as input for the threat analysis tool unit 200. In other words, in the threat analysis tool unit 200, the threat model 245 is expressed by means of the DFD in Fig. 6 described later on and the threat DB 240, and, with regard to the control model 110, data of threats that match threats retained by the threat DB 240 are extracted to create and output the threat list data 210.

It should be noted that the individual elements of the control model 10 created by the model-based development system 10 have trust boundary information indicating whether the individual elements are inside or outside of a trust boundary for security. The threat analysis tool unit 200 may create and output the threat list data 210 indicating a plurality of threats for the control model 110, using data of threats for elements outside of the trust boundary, from among data of the corresponding threats extracted from the threat DB 240.

Furthermore, for example, the threat analysis tool unit 200 may analyze whether or not there is a flow of data that crosses the trust boundary of the control model 110, and, if there is a flow of data that crosses the trust boundary, may determine that there is a threat and create and output the threat list data 210 including data of the determined threat.

### [Processing Overview of Software Development System 1]

Next, a description will be given regarding a processing overview of the software development system 1 configured as mentioned above.

Fig. 2 is a flowchart depicting a processing overview of the software development system 1 according to embodiment 1.

First, the user causes the control model creation tool unit 100 to create the control model 110 (S10).

Next, the threat analysis tool unit 200 creates the threat list data 210 from the control model 110 for which the granularity has been converted (S20).

Next, the control model creation tool unit 100, by means of the user, causes content that has been fed back based on the threat list data 210 to be reflected in the control model 110 (S30).

Next, the assessment tool unit 140 performs a simulation to assess the source code of the control model 110, which has been generated by the automatic code generation tool unit 120 and had the content reflected therein (S40).

Next, the user determines whether or not there is a no-good (NG) portion in the assessment result of the assessment tool unit 140 (S50). If there is an NG portion (yes in S50), the control model creation tool unit 100 is made to revise the control model 110 with respect to said portion by means of a user operation (S60), and processing proceeds to S20. However, if there is no NG portion (no in S50), processing is terminated.

### [Effects Etc.]

As mentioned above, according to the software development system 1 in the present embodiment, it is possible to perform a threat analysis and implement a countermeasure for a threat prior to a program for a development-target device being implemented in the device, and it is therefore possible to improve development efficiency in system development that is based on the model-based method.

Hereinafter, specific examples will be described regarding a development target (control target) for which a control model is created, a granularity conversion, a trust boundary, a control model for which a trust boundary is set, a trust boundary setting operation, and the like.

### (Example of Development Target)

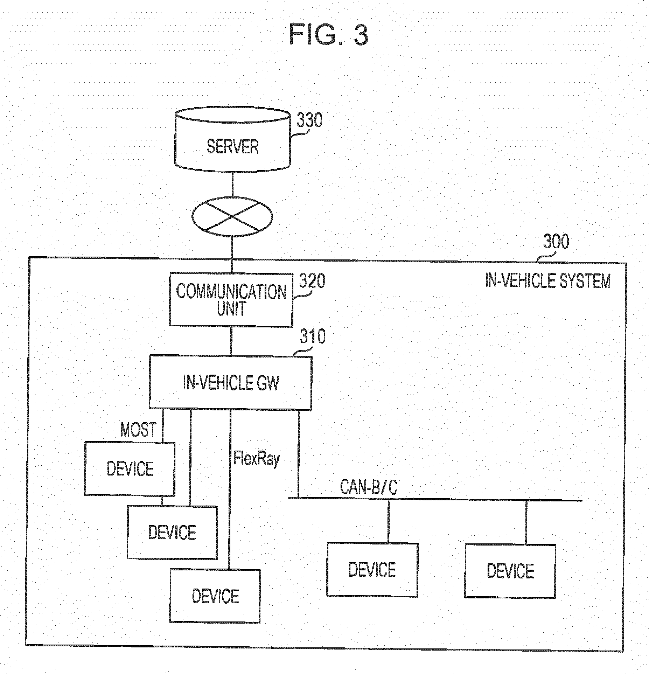

Fig. 3 is a configuration diagram of an in-vehicle system 300 serving an example of a development target. Fig. 3 depicts an overview of the internal configuration of the in-vehicle system 300 and the relationship between the outside and the in-vehicle system 300.

An external server 330 is connected to the in-vehicle system 300 via a communication channel. The in-vehicle system 300 has an in-vehicle GW (gateway) 310, a communication unit 320, and various types of devices.

The communication unit 320 is connected to the in-vehicle GW (gateway) 310. The various types of devices are connected to the in-vehicle GW 310 via an in-vehicle LAN such as a CAN. In the in-vehicle LAN, information relating to map data, ECU update programs, other telematics services, and the like enters via the in-vehicle GW 310 from the external server 330.

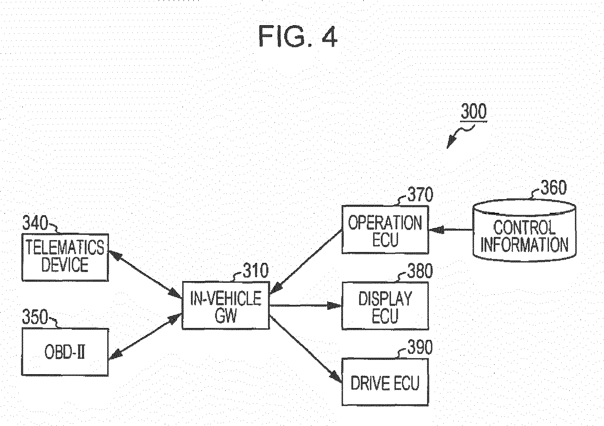

Fig. 4 is a system configuration diagram of the in-vehicle system 300 depicted in Fig. 3.

An external telematics service is connected to the in-vehicle GW310 via a telematics device 340. Furthermore, an OBD-II 350, which is a communication port for connecting a diagnostic device, is connected to the in-vehicle GW 310. It should be noted that the telematics device 340 and the OBD-II 350 correspond to the communication unit 320 in Fig. 3. The in-vehicle GW 310 is connected to the in-vehicle LAN. Various types of ECUs such as an operation ECU 370, a display ECU 380, and a drive ECU 390 are connected to the in-vehicle GW 310 via the in-vehicle LAN. Here, the operation ECU 370 is a steering operation ECU, an accelerator operation ECU, a turn signal operation ECU, or the like. The display ECU 380 is a speed display ECU, a turn signal display ECU, or the like. The drive ECU 390 is a tire/suspension control ECU, an engine control ECU, or the like.

### (Example of Granularity Conversion)

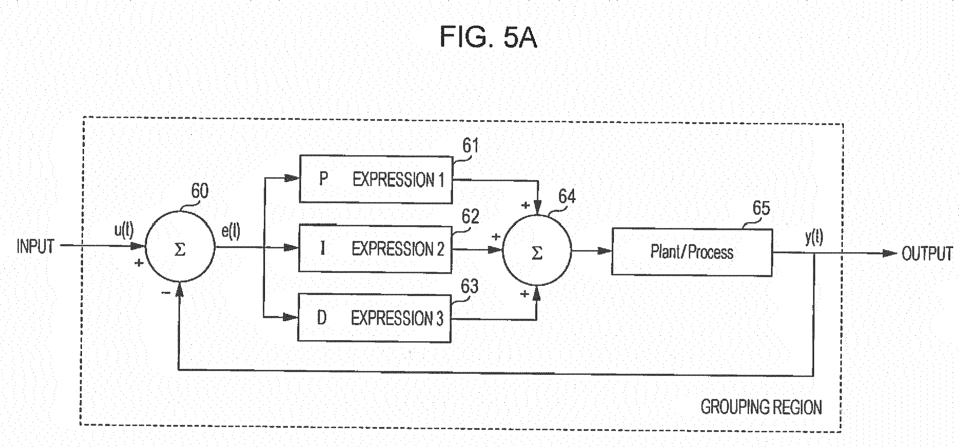

Fig. 5A is a diagram for illustrating an example of a granularity conversion according to embodiment 1.

An example of the case where grouping is performed with respect to the block diagram depicted in Fig. 5A will be described. The block diagram is made up of the four basic arithmetic operations, differentiation/integration, conditional expressions, iteration, and the like, and has small granularity of a level with which source code can be generated. As an example of a block diagram, Fig. 5A depicts an example of a control model that is made up of element 60 to element 65 and is referred to as PID control.

As mentioned above, if a threat analysis is performed on a block diagram having small granularity without conversion, a very large number of threats are extracted and the reflection of such in the system design is not possible. Thus, in the present disclosure, the user uses the granularity conversion unit 25 to perform grouping (granularity conversion) on the block diagram in such a way that a granularity (number of divisions) that is appropriate for a threat analysis is achieved.

The portion surrounded by the dashed line in Fig. 5A (the grouping region in the diagram) is grouped into one group. That is, grouping is performed in such a way that the plurality of elements (element 60 to element 65) included in the block diagram depicted in Fig. 5A form one group. More specifically, the user selects targets for grouping by means of a GUI provided by the granularity conversion unit 25, and the targets are thereby grouped and the granularity is increased. The threat analysis tool unit 200 performs a threat analysis with the targets grouped by the granularity conversion unit 25 as one element of the control model 110.

In embodiment 1, a description has been given with the granularity conversion unit 25 providing a granularity conversion function (grouping function); however, it should be noted that the present disclosure is not restricted thereto. The control model creation tool unit 100 or the threat analysis tool unit 200 may have a function that performs grouping with respect to the control model 110.

### (Example of Portions for Automatic Grouping)

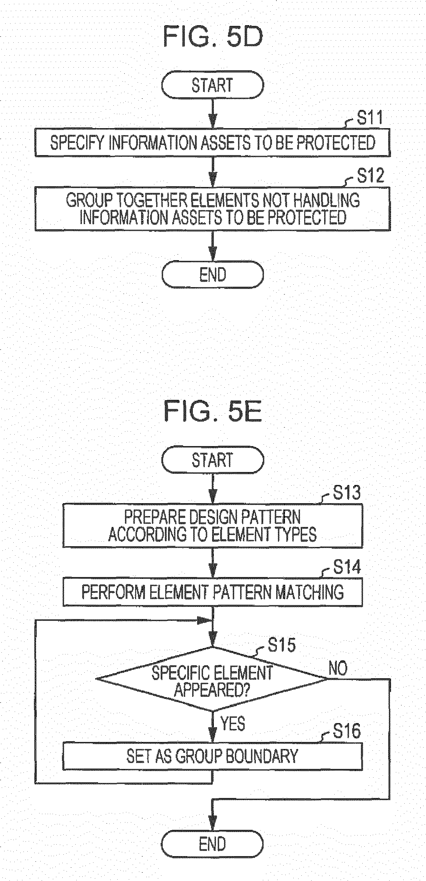

Figs. 5B and 5C are diagrams depicting examples of block diagrams for illustrating a method in which the granularity conversion unit 25 according to embodiment 1 performs grouping automatically. Figs. 5D and 5E are flowcharts depicting an example of processing in which the granularity conversion unit 25 according to embodiment 1 performs grouping automatically.

Fig. 5B depicts an example of a block diagram representing portions of the control model 110 before grouping is performed. Fig. 5C depicts an example of a block diagram representing portions of the control model 110 after grouping has been performed.

In Fig. 5D, first, by means of a user operation, the granularity conversion unit 25 is made to designate (specify) information assets to be protected, with respect to the block diagram depicted in Fig. 5B, for example (S11). More specifically, the user uses the granularity conversion unit 25 to specify information assets to be protected. The way in which the data flows is then added, and read/write information for the information assets to be protected is also entered. In this way, the user causes the granularity conversion unit 25 to embody threats for the block diagram depicted in Fig. 5B. At such time, the granularity conversion unit 25 places elements that do not handle information assets to be protected into one group (S12). Here, the group in the bottom left depicted in Fig. 5C (the portion in which three squares are surrounded by a dashed line) is an example of elements that do not handle information assets to be protected being placed into in one group. In this way, as depicted in Fig. 5B, the granularity conversion unit 25 groups the plurality of elements included in the block diagram so as to form a plurality of elements that are not connected to elements to be protected as information assets and a plurality of elements that are connected to elements to be protected as information assets.

Furthermore, in Fig. 5E, first, by means of a user operation, the granularity conversion unit 25 prepares a design pattern according to the types of elements included in the block diagram depicted in Fig. 5B (S13).

Next, the granularity conversion unit 25 performs pattern matching on the plurality of elements included in the block diagram depicted in Fig. 5B using the design pattern corresponding to the types of elements prepared in S13 (S14).

The granularity conversion unit 25 determines whether a specific element matching the design pattern has appeared in the plurality of elements included in the block diagram depicted in Fig. 5B (S15), and, if a specific element has appeared (yes in S15), the specific element is set as a group boundary (S16). However, if a specific element has not appeared (no in S15), the granularity conversion unit 25 terminates the processing.

It should be noted that, other than the processing depicted in Figs. 5D and 5E, as mentioned above, the granularity conversion unit 25 may group the plurality of elements included in the block diagram, until reaching a preset upper value for the number of times that grouping is to be performed.

Furthermore, the group surrounded by the dashed line in the upper left of Fig. 5C and the group surrounded by the dashed line in the right half of Fig. 5C are examples of design patterns. Furthermore, a specific element, for example, is a module connected to an external network such as a gateway and is where a trust boundary is generally drawn.

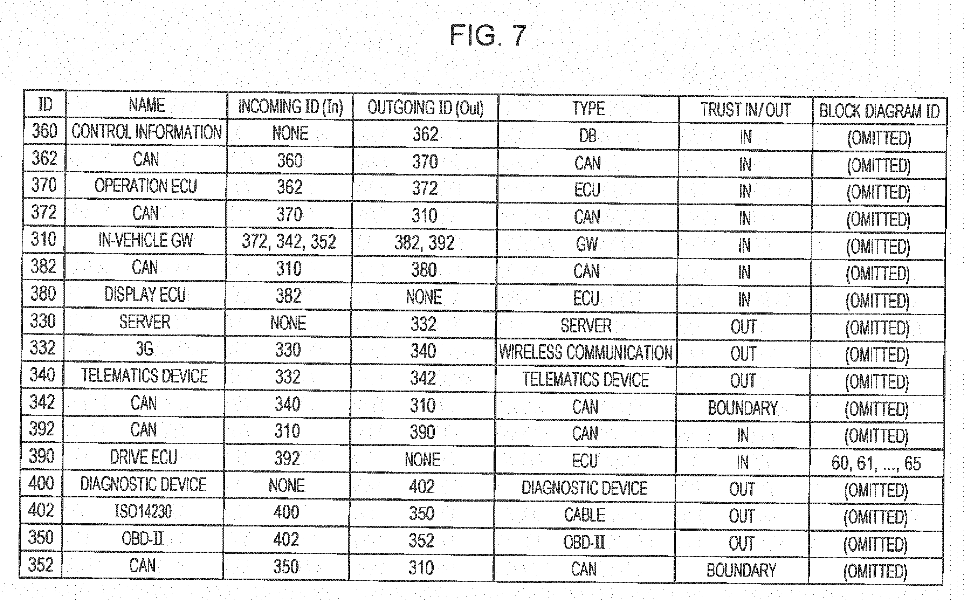

Furthermore, for example, the design pattern may be determined according to the types in Fig. 7 described later on, with the output side of an externally connected telematics device or OBD-II always serving as a group boundary, or the trust boundary always serving as a group boundary.

### (Example of Trust Boundary)

Fig. 6 is a diagram depicting a data flow diagram used to express a threat model. Fig. 6 depicts an example of the case where a trust boundary has been set for the system configuration depicted in Fig. 4 when expressed as a dataflow diagram. Here, a threat model is expressed using a data flow diagram obtained by grouping several elements of a block diagram to achieve a granularity enabling threat analysis and adding a trust boundary.

As depicted in Fig. 6, the operation ECU 370 is a steering operation ECU, an accelerator operation ECU, a turn signal operation ECU, or the like, and is connected to the in-vehicle GW 310 via the in-vehicle LAN. The display ECU 380 is a speed display ECU, a turn signal display ECU, or the like, and is connected to the in-vehicle GW 310. The drive ECU 390 is a tire/suspension control ECU, an engine control ECU, or the like, and is connected to the in-vehicle GW 310.

In Fig. 6, the trust boundary is depicted using a dashed line. The trust boundary means that the devices inside the trust boundary are able to trust each other but the devices outside of the trust boundary are not always able to be trusted. It should be noted that the trust boundary is input by the user of the software development system 1 operating a personal computer or the like.

In the example depicted in Fig. 6, the server 330, which provides an external telematics service, connects to the telematics device 340 via a 3G network 332, and is thereby connected to the in-vehicle GW 310. Furthermore, a diagnostic device 400 connects to the OBD-II 350 via an IS014230 connector 402, and is thereby connected to the in-vehicle GW 310.

As depicted in Fig. 6, the telematics device 340 and the OBD-II 350 are outside of the trust boundary. Therefore, the in-vehicle system 300 in which the in-vehicle GW 310, the operation ECU 370, the display ECU 380, the drive ECU 390, and the like are inside the trust boundary is not always able to trust the telematics device 340 and the OBD-II 350.

It should be noted that a large number of block diagrams are included inside the elements in Fig. 6, and these have been grouped to obtain the elements depicted in Fig. 6. The block diagrams inside the elements have not been depicted in order to avoid the diagram from becoming complex. Furthermore, in Fig. 6, the main elements of the in-vehicle system 300 are within one trust boundary; however, there may be a plurality of trust boundaries.

### (Example of Control Model for Which Trust Boundary Has Been Set)

Fig. 7 is a diagram depicting a database for the control model 110 containing information on the trust boundary depicted in Fig. 6. This database is created by the aforementioned control model creation tool unit 100. This database stores information indicating a trust boundary and indicating that there are devices included therein.

It should be noted that the control model creation tool unit 100 handles only block diagrams that indicate the control model 110, and the threat analysis tool unit 200 may create this database on the basis of the information of a block diagram for the control model 110 created by the control model creation tool unit 100.

In Fig. 7, "ID" indicates a number for each element and is automatically assigned by the control model creation tool unit 100. Furthermore, "Name" indicates the name of each element and is input by the user. "Incoming ID (In)" indicates that data has come from the element of the displayed ID. "Outgoing ID (Out)" indicates that data will go to the element of the displayed ID. "Type" indicates the type of the element. "Trust In/Out" indicates whether the element indicated by the "ID" is inside or outside of the trust boundary, or whether the element crosses the trust boundary. Here, "Boundary" in the "Trust In/Out" column indicates that the element crosses the trust boundary. Furthermore, "Block Diagram ID" is the ID of the block diagram included in the element.

It should be noted that, for the convenience of the description, the numbers (reference numbers) of the elements depicted in Fig. 6 are used for the "ID". For example, it is indicated that the element having "ID" = 390, namely the drive ECU, has a CAN 392 connected prior thereto, has nothing connected subsequent thereto, and is inside the trust boundary. Furthermore, for example, the block diagram of the drive ECU having "ID" = 390 is depicted in Fig. 5A, and it is indicated that block diagram IDs 60, 61, ..., 65 are included in the drive ECU 390, as shown in "Block Diagram ID" for "ID" = 390, namely the drive ECU. It should be noted that the abovementioned Fig. 5A has been depicted in a simplified manner to aid the description, and in practice, a large number of block diagrams would be included.

### (Processing for Creating Control Model 110)

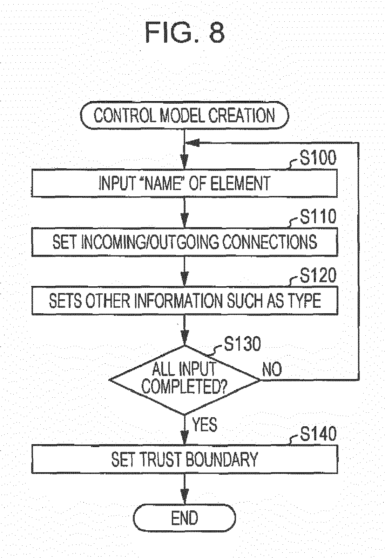

Fig. 8 is a flowchart depicting processing for creating the control model 110 according to embodiment 1.

First, the user of the software development system 1 uses a GUI or the like provided by the control model creation tool unit 100 to input the "Name" of one element that is to make up the control model 110 (S100). An ID is automatically assigned by the control model creation tool unit 100.

Next, the user uses the GUI or the like provided by the control model creation tool unit 100 to set the incoming/outgoing connections for said element (S110). For example, the user inputs the ID of an element that connects prior to said element, and inputs the ID of an element that connects subsequent to said element. It should be noted that a plurality of elements are input if there are a plurality of elements that connect prior or subsequent to said element.

Next, the user uses the GUI or the like provided by the control model creation tool unit 100 to set other information such as the type of said element (S120).

Next, the user determines whether all of the elements have been input (S130). If not all of the elements have been input (no in S130), processing proceeds to S100 and settings for the next element are implemented.

On the other hand, if all of the elements have been input (yes in S130), the user uses the GUI or the like provided by the control model creation tool unit 100 to set the trust boundary for all of the elements (S140).

### (Example of Trust Boundary Setting Operation)

An example of the case where the GUI or the like provided by the control model creation tool unit 100 is used to set two trust boundaries will be described.

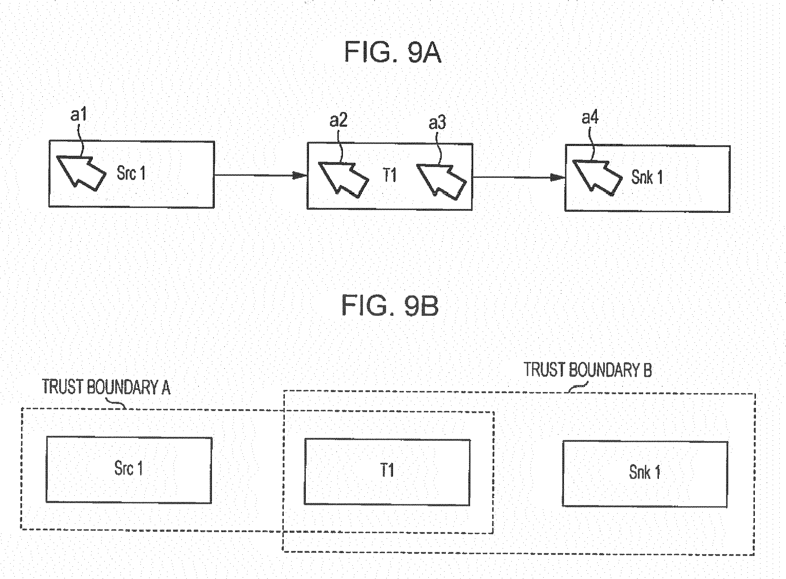

Figs. 9A and 9B are diagrams for illustrating an operation for when a trust boundary is set for the control model 110. Fig. 9A depicts an operation scenario in which the user selects an element using a mouse cursor, and Fig. 9B depicts a scenario in which two trust boundaries are set. It should be noted that Src 1, T1, and Snk 1 depicted in Figs. 9A and 9B are elements of a data flow diagram (DFD), and represent the input, modification, and output of data in a source-transfer-sink configuration.

As depicted in Fig. 9A, the user, in the GUI provided by the control model creation tool unit 100, first selects Src 1 using the mouse cursor (a1), then selects T1 using the mouse cursor (a2), and selects "Execute" (not depicted). As a result, a trust boundary A that includes Src 1 and T1 such as that depicted in Fig. 9B is created.

Next, the user selects T1 using the mouse cursor (a3), then selects Snk 1 using the mouse cursor (a4), and selects "Execute". As a result, a trust boundary B that includes T1 and Snk 1 such as that depicted in Fig. 9B is created.

### (Trust Boundary Setting Operation Processing)

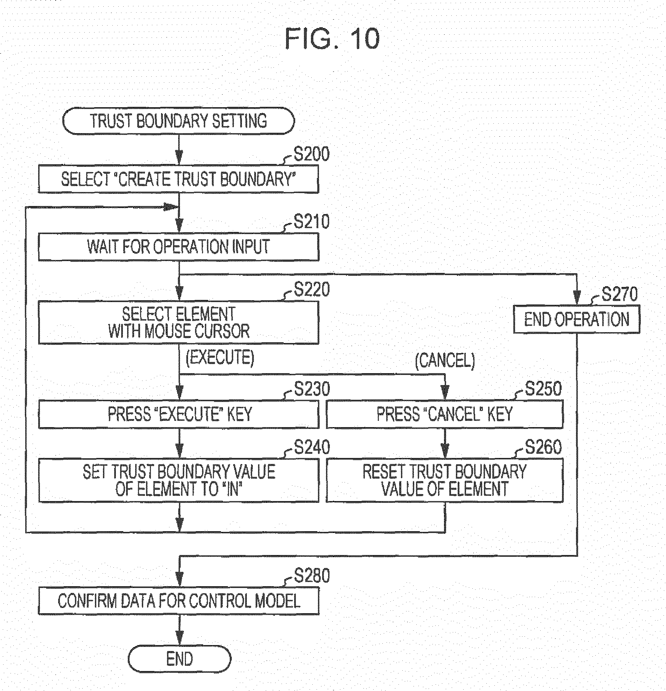

Fig. 10 is a flowchart depicting processing for a trust boundary setting operation.

First, the user of the software development system 1 selects a "Trust Boundary Creation" tool in the GUI or the like provided by the control model creation tool unit 100 (S200).

At such time, the selected tool enters an operation input waiting state (S210).

Next, the user selects an element using the mouse cursor (S220). Specifically, an operation is performed as described in Figs. 9A and 9B, and therefore a description thereof is omitted.

Next, the user selects (presses) "Execute" in the tool (S230).

At such time, the tool sets the selected element to "In" in order to be included inside the trust boundary (S240), and processing returns to S210.

On the other hand, in the case where the set value for the selected element is to be canceled, in the tool, the user selects (presses) "Cancel" (S250). At such time, the trust boundary value for the element is reset (S260), and processing returns to S210.

In S201, in the case where the processing of S220 to S240 has been finished for all of the elements included inside the trust boundary (S270), the tool is made to reflect the information of the trust boundary in the control model 110 and confirm the data of the control model 110 (S280).

Hereinafter, specific examples will be described regarding the threat DB 240, the threat list data 210, and processing to create the threat list data 210 carried out by and the threat analysis tool unit 200.

### (Example of Threat DB 240)

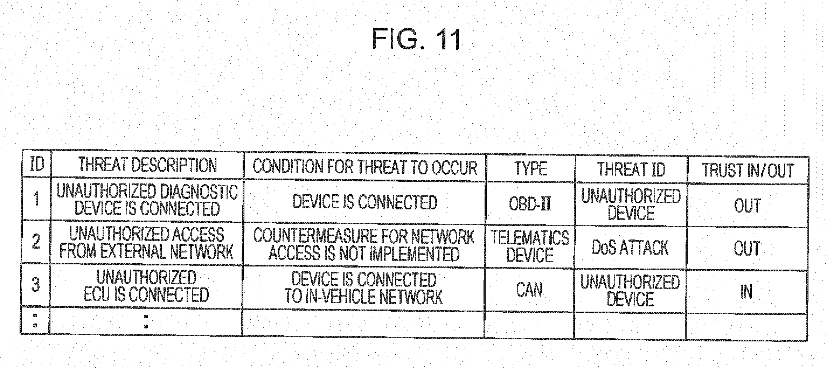

Fig. 11 is a diagram depicting an example of data retained by the threat DB 240 according to embodiment 1. The threat DB 240 depicted in Fig. 11 stores a description of a threat, the condition under which that threat occurs, a type indicating the source of that threat, information indicating whether that source is inside or outside of the trust boundary, and a threat ID that is used when specifying a countermeasure for the threat.

For example, for ID = 1, it is indicated that the threat is "Unauthorized diagnostic device is connected", the source of that threat is the "OBD-II", and the source is outside of the trust boundary. Similarly, for ID = 2, it is indicated that the threat is "Unauthorized access from external network", the source of that threat is a "Telematics" device, and the source is outside of the trust boundary.

### (Example of Threat List Data 210)

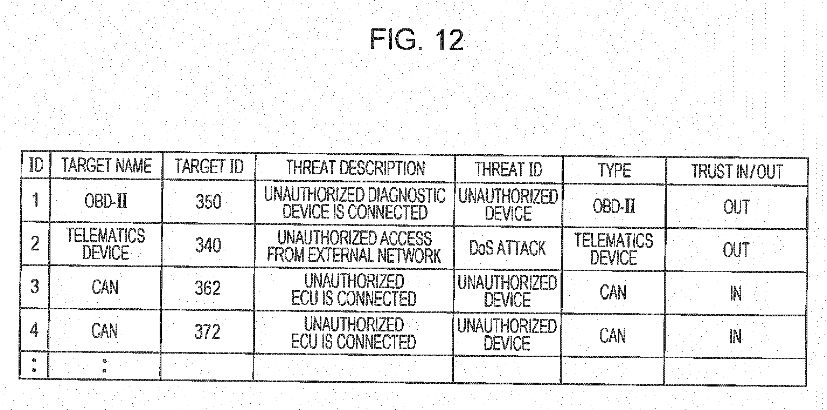

Fig. 12 is a diagram depicting an example of the threat list data 210 according to embodiment 1. The threat list data 210, as mentioned above, is created by means of the threat analysis tool unit 200, and indicates a plurality of threats for the control model 110. The threat list data 210 depicted in Fig. 12 stores a target name, a target ID, a threat description, a threat ID, a type, and information indicating whether inside or outside of the trust boundary. As mentioned above, this threat list data 210 is created, from the control model 110 and the threat DB 240, and output by the threat analysis tool unit 200.

For example, for ID = 1, it is indicated that the threat is "Unauthorized diagnostic device is connected", the source of that threat is the "OBD-II", and the source is outside of the trust boundary, which is the same as the data of the threat DB 240 described in Fig. 11. Furthermore, for ID = 1, at the same time, the target name "OBD-II" and the target ID "350" are indicated as data of a target for which a countermeasure is required. The same is also true for ID = 2 hereinafter, and therefore a description thereof is omitted.

### (Processing for Creating Threat List Data 210)

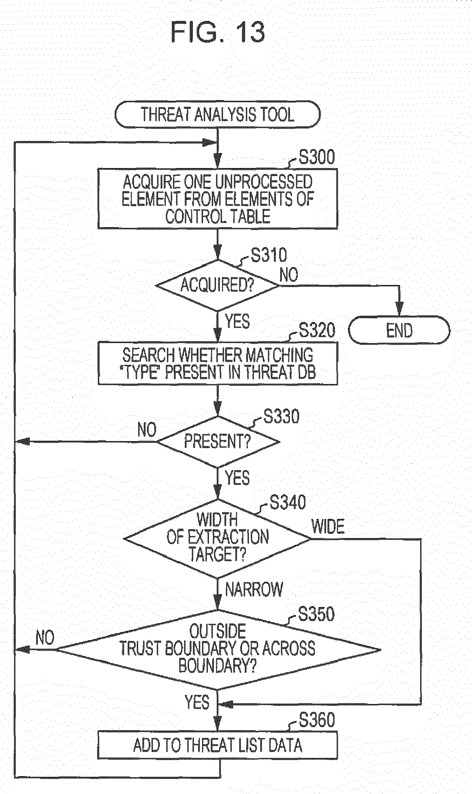

Fig. 13 is a flowchart depicting processing for creating the threat list data 210 according to embodiment 1.

The threat analysis tool unit 200 uses the database for the control model 110 depicted in Fig. 7, for example, and the threat DB 240 depicted in Fig. 11, for example, to create the threat list data 210.

As depicted in Fig. 13, first, by means of a user operation, the threat analysis tool unit 200 acquires one unprocessed item from among the elements of the control model 110 (S300).

Next, the threat analysis tool unit 200 determines whether or not an unprocessed item has been acquired (S310). If an unprocessed item has not been acquired (no in S310), the threat analysis tool unit 200 terminates the processing and outputs the created threat list data 210.

If the threat analysis tool unit 200 has acquired an unprocessed item in S310 (yes in S310), a search is performed as to whether there is a matching "type" among the threats retained by the threat DB (S320).

Processing proceeds to S340 if there is a matching item among the threats retained by the threat DB (yes in S330), and processing returns to S300 if not (no in S330).

For example, in the case where the threat analysis tool unit 200 acquires ID = 350, namely "OBD-II", depicted in Fig. 7, as an unprocessed item, the threat analysis tool unit 200 searches the threat DB 240 and, since there is a matching "type" among the threat data for ID = 1 depicted in Fig. 11, sets the "type" of ID = 1 as a threat candidate. It should be noted that in the case where there a plurality of types in the threat DB 240 (where there are a plurality of the same type with different IDs), such as when there are a plurality of types of threats for the OBD-II, reference may be made to each ID of the threat DB 240. Furthermore, in the case where there are a plurality of threats of the same type, these may be processed collectively.

Next, the threat analysis tool unit 200 determines the width of a target to be extracted in accordance with the section of the user (S340). It should be noted that the width of the extraction target may be preselected prior to the threat analysis tool unit 200 being used, and is preferably selected before the threat list data 210 is created.

Next, in the case where the extraction target is selected to be wide (wide in S340), the processing of S350 is skipped and the threat data of the threat DB having the "Type" for which a search was performed in S320 is extracted and added to the threat list data 210 (S360).

On the other hand, in the case where the extraction target is selected to be narrow (narrow in S340), the threat analysis tool unit 200 determines whether the "Type" for which a search was performed in S320 is outside or across the trust boundary (S350), and, if that is the case, namely that there is a dataflow that is crossing the trust boundary (yes in S350), extracts the threat data of the threat DB having the "Type" for which a search was performed in S320 and adds such to the threat list data 210 (S360).

For example, in the case where the "Type" for which a search was performed in S320 is ID = 350, namely "OBD-II", depicted in Fig. 7, this is added to the threat list data 210 when the extraction target is selected to be wide. On the other hand, when the extraction target is selected to be narrow, whether there is a dataflow that crosses the trust boundary is examined. "OBD-II" having ID = 350 depicted in Fig. 7 is outside of the trust boundary and has "CAN" having ID = 352 thereafter, as depicted in Fig. 7. "In-vehicle GW" having ID = 310 is after "CAN" having ID = 352, and this is inside the trust boundary. That is, there is a dataflow crossing the trust boundary between "OBD-II" having ID = 350 and "In-vehicle GW" having ID = 310. Consequently, when the extraction target is selected to be narrow, the threat analysis tool unit 200 extracts the threat data of the threat DB having "OBD-II", which is the "Type" for which a search was performed in S320, and adds such to the threat list data 210.

In this way, by using information indicating whether an element is inside or outside of the trust boundary, it is possible to easily realize control with which the threat list data 210 is created with a wide extraction target, or the threat list data 210 is created with a narrow extraction target in that elements inside the trust boundary are considered as not corresponding to threat candidates and are excluded from the extraction target.

### (Example of Feedback for Control Model 110)

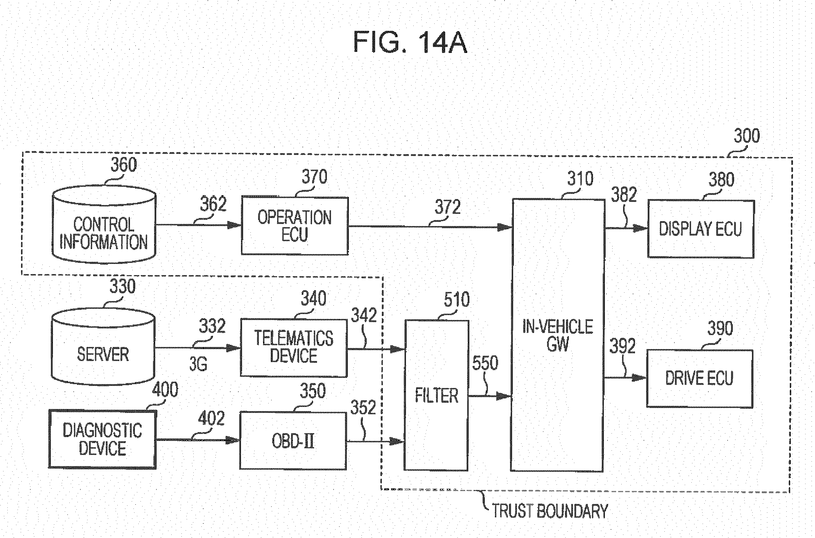

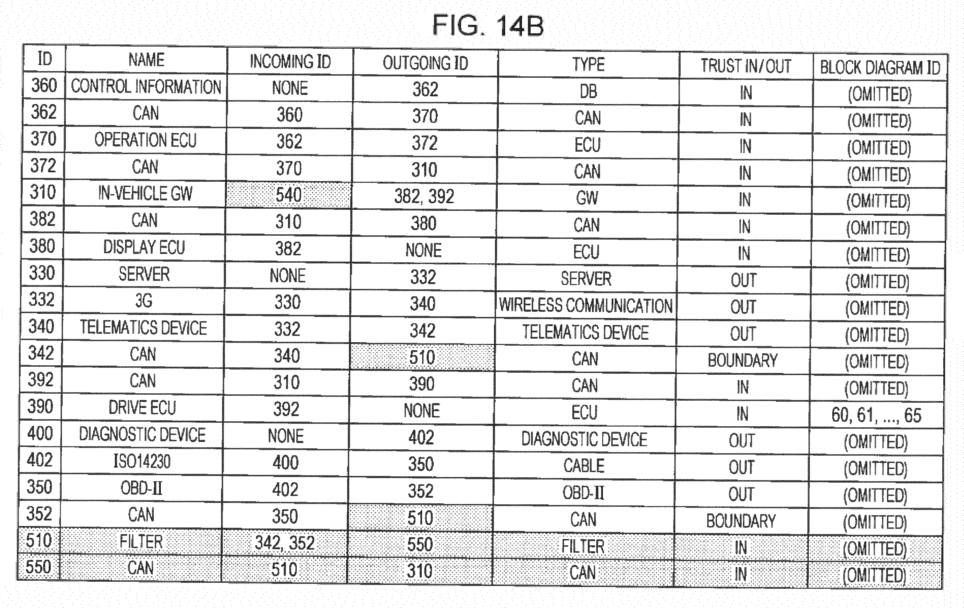

Fig. 14A is a diagram depicting a data flow diagram for a control model in which feedback is performed on the basis of a threat list according to embodiment 1. Fig. 14B is a diagram depicting a database for the control model 110 in which feedback has been implemented on the basis of a threat list according to embodiment 1. It should be noted that, in Fig. 14B, diagonal lines are drawn in portions that have been revised from the control model 110 created by the control model creation tool unit 100 depicted in Fig. 7.

In the present embodiment, the user of the software development system 1 reflects (feeds back) the threat list indicated in the threat list data 210 created and output by the threat analysis tool unit 200, in the control model 110, using the control model creation tool unit 100. More specifically, as depicted in Figs. 14A and 14B, the user revises the control model 110 in such a way that countermeasures for threats are implemented therein, on the basis of the threat list indicated in the threat list data 210 as depicted in Fig. 11.

### [Summary]

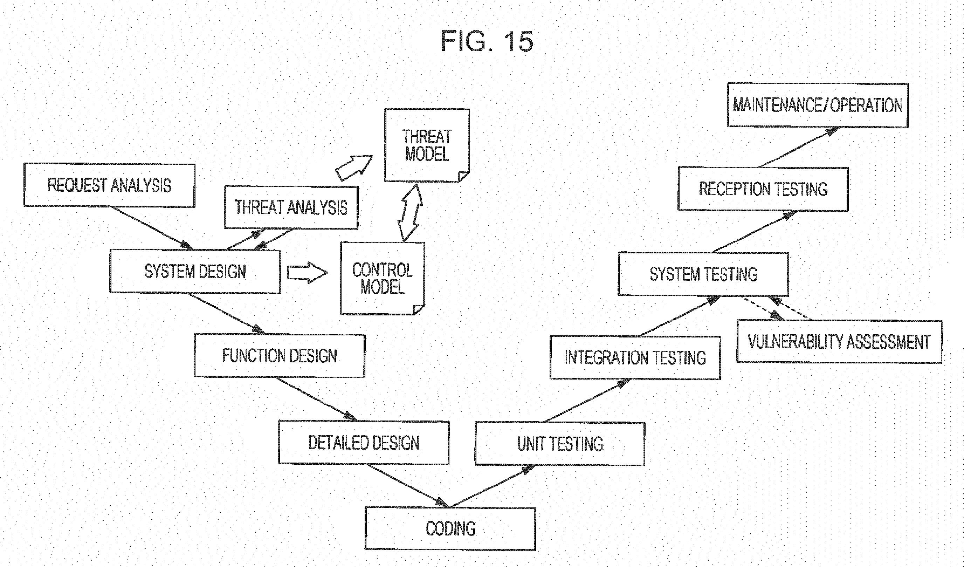

Fig. 15 is a diagram depicting a system development procedure according to a V-shaped model in embodiment 1.

In the present embodiment, due to the model-based development system 10 and the threat analysis system 20 being made to cooperate, a threat analysis is performed at an upstream stage of system development and countermeasures for threats are reflected in the control model 110 on the basis of the threat list indicated in the output threat list data 210. That is, it becomes possible to implement countermeasures for threats at an upstream stage of system development, namely the system development stage.

In this way, it becomes possible to respond quickly with little refactoring, and it is therefore possible to realize a software development system and a program therefor with which development efficiency in system development that is based on the model-based method can be improved.

### (Embodiment 2)

In embodiment 1, a description was given regarding the case where the user revises the control model 110 in such a way that countermeasures for threats are implemented therein, using the control model creation tool unit 100, on the basis of the threat list indicated in the threat list data 210; however, the present disclosure is not restricted thereto. The control model creation tool unit 100 may be made to revise the control model 110 in such a way that countermeasures for threats are implemented therein, by the threat analysis system creating countermeasures on the basis of the threat list data 210 and feeding the countermeasures back to the control model creation tool unit 100. Hereinafter, this case will be described as embodiment 2.

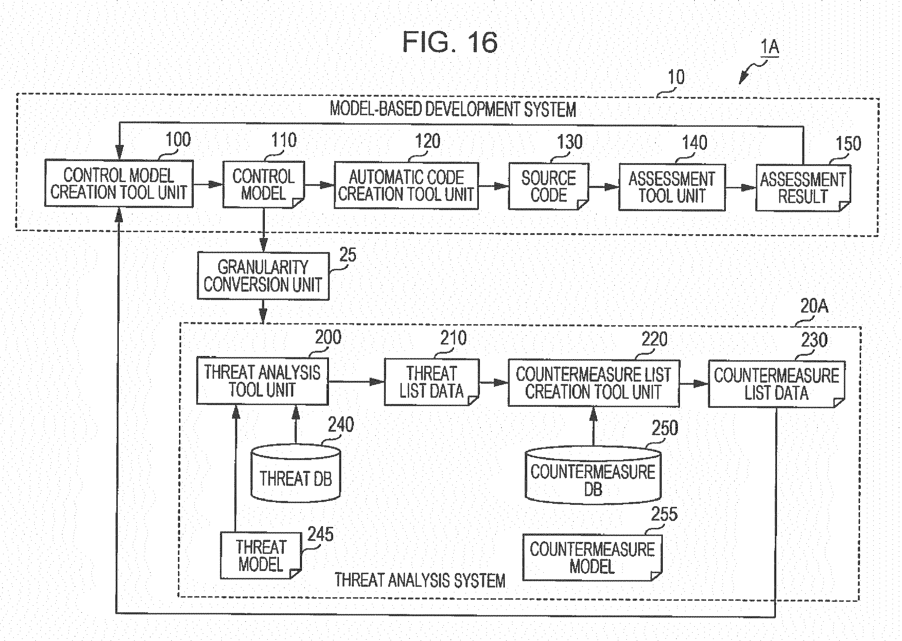

Fig. 16 is a configuration diagram depicted on the basis of the flow of data in a software development system 1A according to embodiment 2. The same elements as in Fig. 1 are denoted by the same reference numbers, and a detailed description thereof is omitted.

In the software development system 1A depicted in Fig. 16, the configuration of a threat analysis system 20A is different from the software development system 1 according to embodiment 1.

### [Threat Analysis System 20A]

The threat analysis system 20A depicted in Fig. 16 has a different configuration from that of the threat analysis system 20 according to embodiment 1 in that a countermeasure list creation tool unit 220 and a countermeasure DB 250 have been added. Hereinafter, a description will be given focusing on the points that are different from embodiment 1.

The countermeasure DB 250 is a database that retains data of countermeasure means for each of one or more threats. In the present disclosure, the countermeasure DB 250 stores countermeasures for each of the threats. It should be noted that in the case where there are a plurality of countermeasures for a threat, the countermeasure DB 250 may store the plurality of countermeasures in descending order of priority in order to increase processing efficiency. The countermeasures for each of the threats stored in the countermeasure DB 250 are created from a countermeasure model 255 in which the attack content of each of the plurality of threats and countermeasure methods therefor are modeled, for example.

The countermeasure list creation tool unit 220 extracts, from the countermeasure DB 250, countermeasure means for each of the plurality of threats included in the threat list data 210 created and output by the threat analysis tool unit 200, to thereby create and output data of a countermeasure list that indicates a list of countermeasure means for the control model 110. The countermeasure list creation tool unit 220 outputs the data of the countermeasure list to the model-based development system 10, to thereby cause the model-based development system 10 to reflect the countermeasure list in the control model 110.

That is, the countermeasure list creation tool unit 220 creates data for a countermeasure list (countermeasure list data 230) that constitutes countermeasures for threats, from the threat list data 210 and the countermeasure DB 250, and outputs the data of the countermeasure list to the control model creation tool unit 100.

The control model creation tool unit 100 then reflects the countermeasure list indicated in the input countermeasure list data 230, in the control model 110.

In other words, the control model creation tool unit 100 revises the created control model 110 into a control model 110 in which countermeasures for threats included in the countermeasure list indicated in the countermeasure list data 230 have been implemented.

### [Processing Overview of Software Development System 1A]

Next, a description will be given regarding a processing overview of the software development system 1A configured as mentioned above.

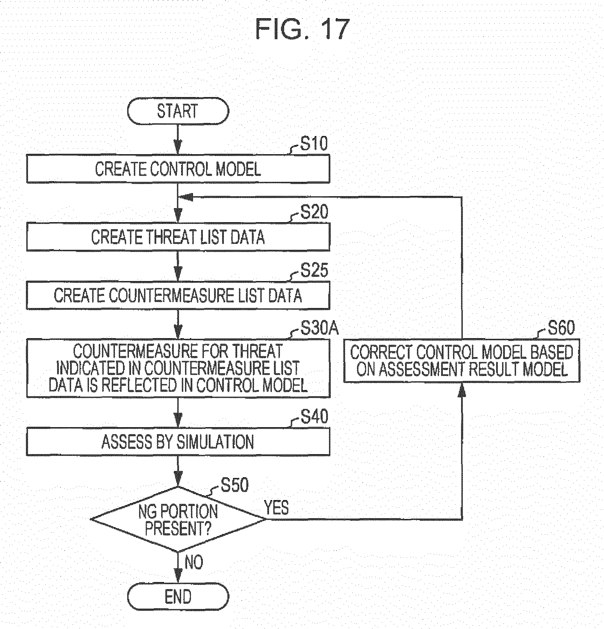

Fig. 17 is a flowchart depicting a processing overview of the software development system 1A according to embodiment 2. The same elements as in Fig. 2 are denoted by the same reference numbers, and a detailed description thereof is omitted.

In S20, as mentioned above, the threat analysis tool unit 200 creates the threat list data 210 from the control model 110 for which the granularity has been converted.

Next, the countermeasure list creation tool unit 220 creates the countermeasure list data 230 by extracting, from the countermeasure DB 250, countermeasure means for each of the plurality of threats (threat list) included in the threat list data 210, and outputs the countermeasure list data to the control model creation tool unit 100 (S25).

Next, the control model creation tool unit 100 causes the countermeasures for the threats indicated in the countermeasure list data 230 to be reflected in the control model 110 (S30A).

### [Effects Etc.]

As mentioned above, according to the software development system 1A in the present embodiment, it is possible to perform a threat analysis and implement countermeasures for threats prior to a program for a development-target device being implemented in the device, and it is therefore possible to improve development efficiency in system development that is based on the model-based method.

Hereinafter, specific examples will be described regarding the countermeasure DB 250, the countermeasure list data 230, processing performed by the countermeasure list creation tool unit 220, processing for reflecting the countermeasure list in the control model 110, and the like.

### (Example of Countermeasure DB 250)

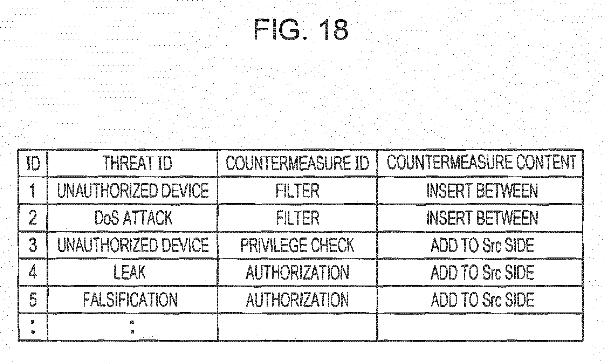

Fig. 18 is a diagram depicting an example of data retained by the countermeasure DB 250 according to embodiment 2. The countermeasure DB 250 depicted in Fig. 18 stores a threat ID, a countermeasure ID that indicates a countermeasure for the threat indicated by the threat ID, and countermeasure content that indicates a method and content with which the countermeasure indicated by the countermeasure ID is carried out.

For example, for ID = 1, in the case where the threat ID is "Unauthorized device", the countermeasure ID is "Filter" and the countermeasure content is "Insert between". The same is also true for ID = 2 hereinafter, and therefore a description thereof is omitted.

### (Example of Countermeasure List Data 230)

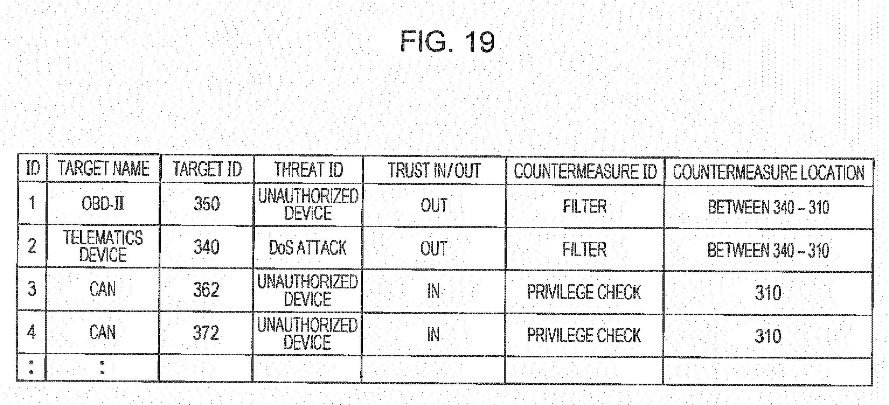

Fig. 19 is a diagram depicting an example of the countermeasure list data 230 according to embodiment 2. As mentioned above, the countermeasure list data 230 is data that indicates a list of countermeasure means for the control model 110. The countermeasure list data 230 depicted in Fig. 19 has stored therein a target name, a target ID, a threat ID, whether inside/outside the trust boundary, a countermeasure ID, and a countermeasure location. Here, the target means a target for which a countermeasure is to be implemented. As mentioned above, this countermeasure list data 230 is created from the threat list data 210 and the countermeasure DB 250 and output by the countermeasure list creation tool unit 220.

For example, for ID = 1, the target name is "OBD-II", the threat ID is "Unauthorized device", the target ID is "Filter", namely that a filter is to be set up, and the countermeasure location is "Between 340 and 310", namely that the filter is to be set up between 340 and 310. The same is also true for ID = 2 hereinafter, and therefore a description thereof is omitted.

### (Creation Processing of Countermeasure List Creation Tool Unit 220)

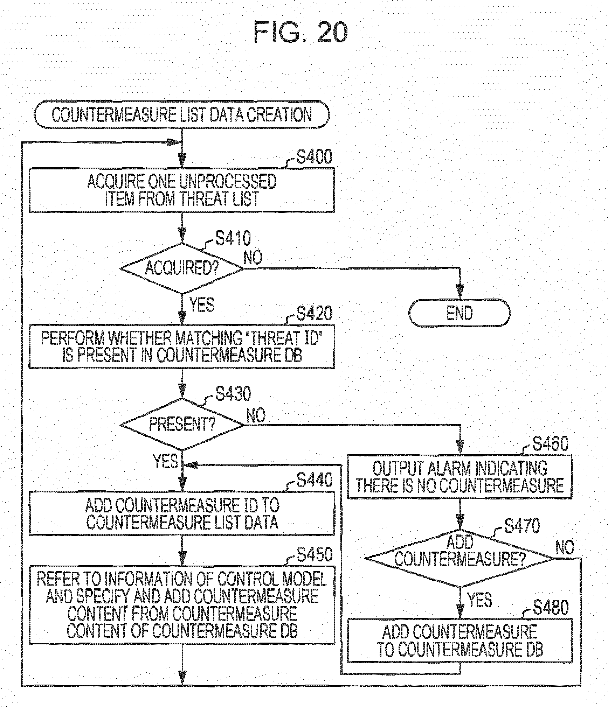

Fig. 20 is a flowchart depicting creation processing performed by the countermeasure list creation tool unit 220 according to embodiment 2. The countermeasure list creation tool unit 220 creates the countermeasure list data 230 using the threat list data 210 depicted in Fig. 12, for example, and the countermeasure DB 250 depicted in Fig. 18, for example.

As depicted in Fig. 20, first, by means of a user operation, the countermeasure list creation tool unit 220 acquires one unprocessed item from the threat list included in the threat list data 210 (S400).

Next, the countermeasure list creation tool unit 220 determines whether or not an unprocessed item has been acquired (S410). If an unprocessed item has not been acquired (no in S410), the countermeasure list creation tool unit 220 terminates the processing and outputs the created countermeasure list data 230.

If the countermeasure list creation tool unit 220 has acquired an unprocessed item in S410 (yes in S410), a search is performed as to whether there is a matching item among the "threat IDs" retained by the countermeasure DB 250 (S420).

If there is a matching item among the "Threat IDs" retained by the countermeasure DB (yes in S430), processing proceeds to S440 and a countermeasure ID is added to the countermeasure list data 230 (S440). The countermeasure list creation tool unit 220 then, from the "Countermeasure content" corresponding to the matching "Threat ID" retained by the countermeasure DB 250, refers to information of the control model 110, specifies countermeasure content, and adds the countermeasure content corresponding to the threat ID to the countermeasure list data 230 (S450).

For example, in the case where the "Threat ID" acquired in S400 is the "Threat ID" having ID = 1 depicted in Fig. 12 (of the threat list data 210), namely an unauthorized device, it is retrieved that there is a "Threat ID" that matches ID = 1 depicted in Fig. 18 (of the countermeasure DB 250), namely an unauthorized device. The "Countermeasure ID" of said "Threat ID" retained in the countermeasure DB 250 is that of a filter and the "Countermeasure location" is that of inserting between, and therefore the countermeasure list creation tool unit 220 specifies the place where a filter is to be inserted from the control model 110 depicted in Figs. 6 and 7. The countermeasure list creation tool unit 220 adds this information to the countermeasure fist data.

In S430, if there are no matching items among the "Threat IDs" retained by the countermeasure DB 250 (no in S430), processing proceeds to S460, and the countermeasure list creation tool unit 220 outputs an alarm indicating that there are no countermeasures to the user (S460).

Next, the countermeasure list creation tool unit 220 queries the user as to whether or not a countermeasure is to be added (S470).

If a countermeasure is to be added (yes in S470), in accordance with the user operation, the countermeasure list creation tool unit 220 adds a countermeasure to the countermeasure DB 250 (S480), and processing proceeds to S440 for that countermeasure to be reflected in the countermeasure list data 230.

On the other hand, if a countermeasure is not to be added (no in S470), the user has determined that a countermeasure for said threat is not required, and the countermeasure list creation tool unit 220 therefore returns to S400.

The countermeasure list data 230 created in this way is output to the control model creation tool unit 100 of the model-based development system 10. The control model creation tool unit 100 reflects the countermeasure list indicated in the countermeasure list data 230, in the control model 110.

### (Processing for Reflecting in Control Model 110)

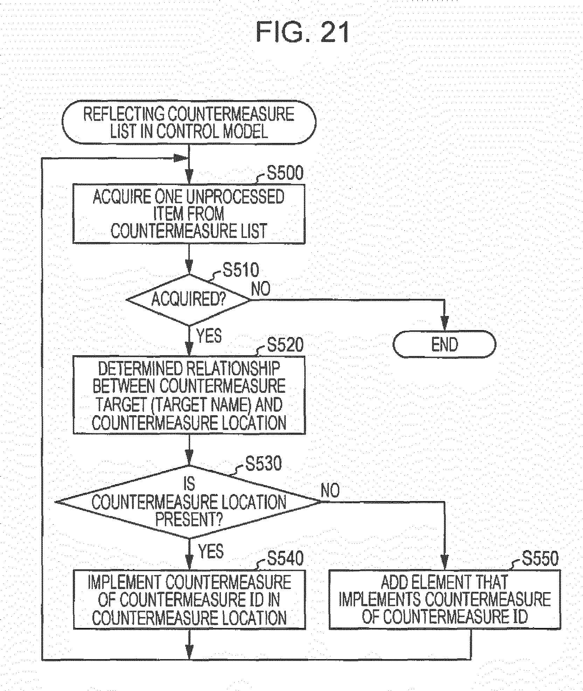

Fig. 21 is a flowchart depicting processing for reflecting a countermeasure list in the control model 110.

The control model creation tool unit 100 causes the countermeasure list indicated in the countermeasure list data 230 depicted in Fig. 19, for example, to be reflected in the control model 110, and creates a database for the control model 110 depicted in Fig. 14B, for example.

As depicted in Fig. 21, first, by means of a user operation, the control model creation tool unit 100 acquires one unprocessed item from the countermeasure list indicated in the countermeasure list data 230 (S500).

Next, the control model creation tool unit 100 determines whether or not an unprocessed item has been acquired (S510). If an unprocessed item has not been acquired (no in S510), the control model creation tool unit 100 terminates the processing and outputs the control model 110 created up to that point.

If the control model creation tool unit 100 has acquired an unprocessed item in S510 (yes in S510), the relationship between the countermeasure target (the "Target name" column in Fig. 19) and the "Countermeasure location" is determined (S520).

If there is a countermeasure location (yes in S530), the countermeasure of the countermeasure ID is implemented in the countermeasure location (S540). On the other hand, if there is no countermeasure location (no in S530), an element for implementing the countermeasure of the countermeasure ID is added (S550).

For example, the "Countermeasure location" for the "Target name" having ID = 1, namely the OBD-II, of the countermeasure list depicted in Fig. 19 is between 340 and 310, but the filter indicated by the "Countermeasure ID" does not exist as an element of the control model 110. Therefore, the control model creation tool unit 100 adds "Filter" indicated by the countermeasure ID.

In this way, in the present embodiment, it is possible for the countermeasure list indicated in the countermeasure list data 230 to be reflected in the control model 110 using the control model creation tool unit 100, in other words, automatically by means of a computer program.

### (Embodiment 3)

In embodiments 1 and 2, a description was given regarding implementing countermeasures for threats at an upstream stage of system development, namely the system development stage. A function with which it is possible to simulate and test an attack may be included in the control model 110 for the development target. Thus, it is possible to confirm the effectiveness of a security countermeasure function at an upstream stage of system development, namely the system development stage, and it is therefore possible to further reduce refactoring and to improve development efficiency in system development that is based on the model-based method. Hereinafter, this case will be described as embodiment 3.

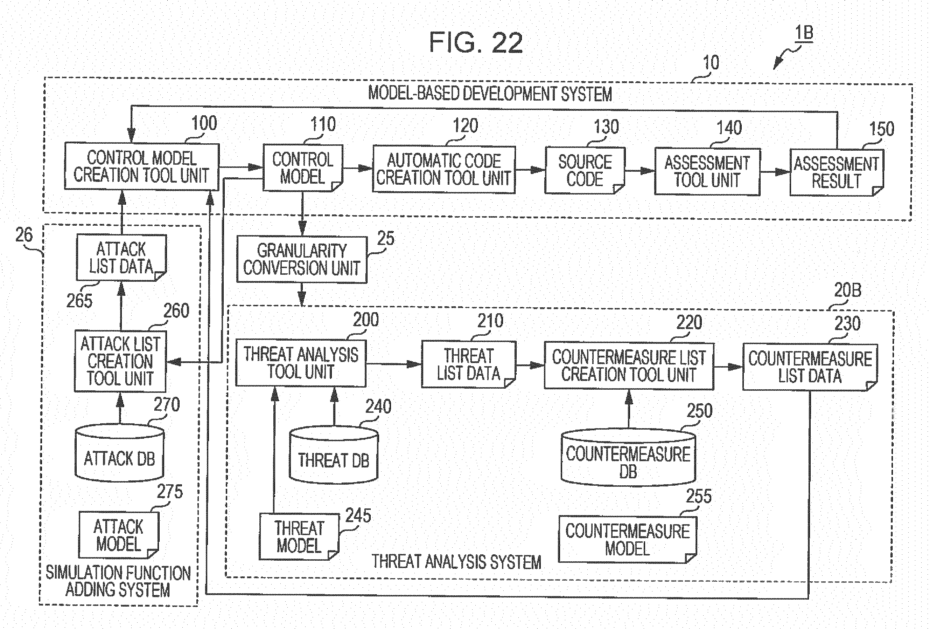

Fig. 22 is a configuration diagram depicted on the basis of the flow of data in a software development system 1 B according to embodiment 3. The same elements as in Figs. 1 and 16 are denoted by the same reference numbers, and a detailed description thereof is omitted.

The software development system 1B depicted in Fig. 22 is different from the software development system 1A according to embodiment 2 in that a simulation function adding system 26 has been added. Hereinafter, a description will be given focusing on the points that are different from embodiment 2.

### [Simulation Function Adding System 26]

The simulation function adding system 26 is provided with an attack list creation tool unit 260 and an attack DB 270.

The attack DB 270 is a database that retains data of each of one or more attacks on information security. In the present embodiment, the attack DB 270 stores attack methods and attack procedures, and stores content corresponding to the threat DB 240. The attack methods and attack procedures stored in the attack DB 270, for example, are created from an attack model 275 obtained by modeling attack content (threat description) constituting a threat and a procedure for that attack content.

The attack list creation tool unit 260 extracts data of corresponding attacks from the attack DB 270 with respect to the individual elements making up the control model 110, to thereby create and output data of an attack list (attack list data 265) that indicates a plurality of attacks on the control model 110. Furthermore, the attack list creation tool unit 260 outputs the attack list data 265 to the model-based development system 10 to thereby cause the model-based development system 10 to reflect the attack list indicated in the attack list data 265, in the control model 110, and cause a simulation to be performed to assess the source code of the control model 110 in which the attack list has been reflected.

That is, the attack list creation tool unit 260 creates the attack list data 265 from the control model 110 and the attack DB 270, and outputs such to the control model creation tool unit 100.

The control model creation tool unit 100 then adds, to the control model 110, a function for simulating an attack on the basis of an attack procedure from within the attack list indicated in the attack list data 265 created by the attack list creation tool unit 260. As a result, the assessment tool unit 140 is able to simulate an attack on the control model 110, and it is therefore possible to confirm the effectiveness of a security countermeasure function at an upstream stage of system development, namely the system development stage.

### [Processing Overview of Software Development System 1B]

Next, a description will be given regarding a processing overview of the software development system 1 B configured as mentioned above.

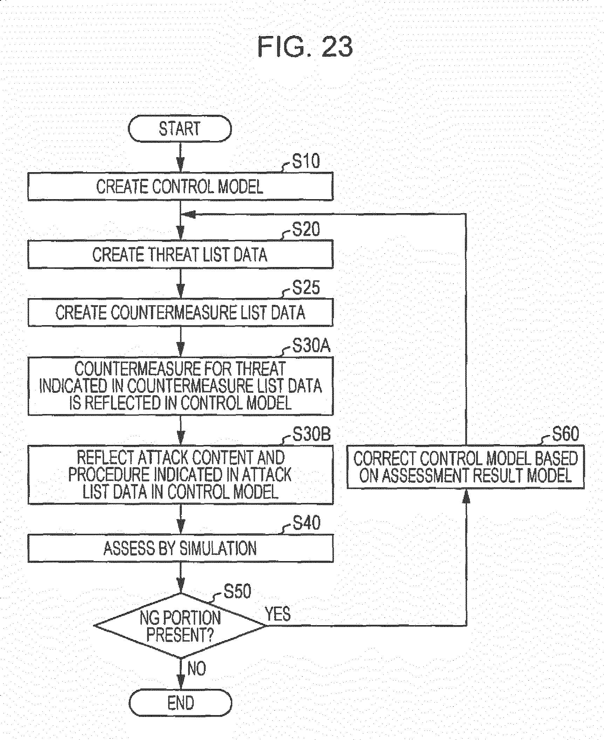

Fig. 23 is a flowchart depicting a processing overview of the software development system 1B according to embodiment 3. The same elements as in Figs. 2 and 17 are denoted by the same reference numbers, and a detailed description thereof is omitted.

In S30A, as mentioned above, the control model creation tool unit 100 causes countermeasures for threats indicated in the countermeasure list data 230 to be reflected in the control model 110.

Next, the control model creation tool unit 100 causes attack content from within the attack list indicated in the attack list data 265 and a procedure for the attack content to be reflected in the control model 110 (S30B). More specifically, the control model creation tool unit 100 adds, to the control model 110, a function for simulating an attack on the basis of the attack content from within the attack list indicated in the attack list data 265 and the procedure for the attack content.

It should be noted that the control model creation tool unit 100 may display the attack list indicated by the attack list data 265 automatically by means of a GUI, and the user, using the GUI, may select which attack from within the attack list is to be added to the control model 110, and this may be arranged in the dataflow, or the control model creation tool unit 100 may carry out everything automatically.

The assessment tool unit 140 then performs a simulation to assess the source code of the control model 110 that has been generated by the automatic code generation tool unit 120 and had the content reflected therein, and also to perform an attack on the control model 110 (S40).

### [Effects Etc.]

As mentioned above, according to the software development system 1B in the present embodiment, in system development using the model-based method, it is possible to sufficiently implement security countermeasures, to prevent security holes from occurring, and to also increase the efficiency of development.

More specifically, it is possible to not only perform a threat analysis and implement countermeasures for threats prior to a program for a development-target device being implemented in the device, but it is also possible to simulate an attack on the control model 110, and it is therefore possible to improve development efficiency in system development that is based on the model-based method.

That is, by realizing a development environment in which there is cooperation between model-based development and threat analysis, it is possible to reduce refactoring of the development work to a considerable extent. Furthermore, it is possible to carry out a simulation relating to security at the design stage, and therefore there is an effect in that it is possible to manufacture a security function at an upstream stage and it is possible to increase the security quality of the development-target product.

Hereinafter, specific examples will be described regarding the attack DB 270, the attack list data 265, processing performed by the attack list creation tool unit 260, and the like.

### (Example of Attack DB 270)

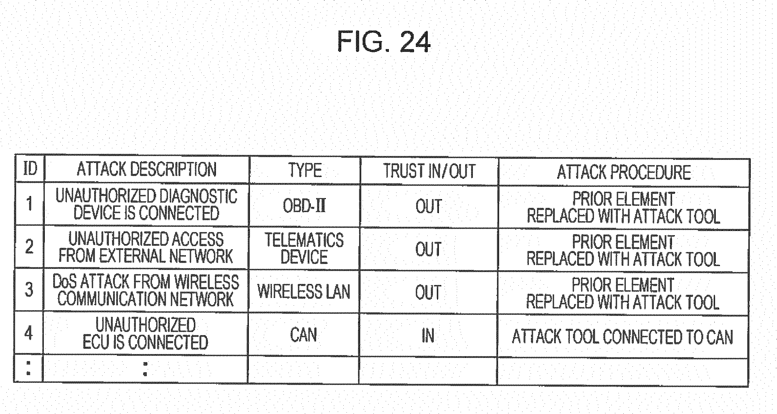

Fig. 24 is a diagram depicting an example of data retained by the attack DB 270 according to embodiment 3. The attack DB 270 depicted in Fig. 24 stores an "Attack Description" that indicates the content of an attack, a "Type" that indicates an attack target, "Trust In/Out" that indicates whether the source of an attack is inside or outside of the trust boundary, and an "Attack Procedure" that indicates the procedure of an attack on an attack target.

For example, for ID = 1, "Attack Description" indicates that an unauthorized diagnostic device is connected, "Type" indicates an "OBD-II", "Trust In/Out" indicates outside, namely that the source of the attack is outside of the trust boundary, and "Attack Procedure" indicates that the prior element is replaced with an attack tool. The same is also true for ID = 2 hereinafter, and therefore a description thereof is omitted,

### (Example of Attack List Data 265)

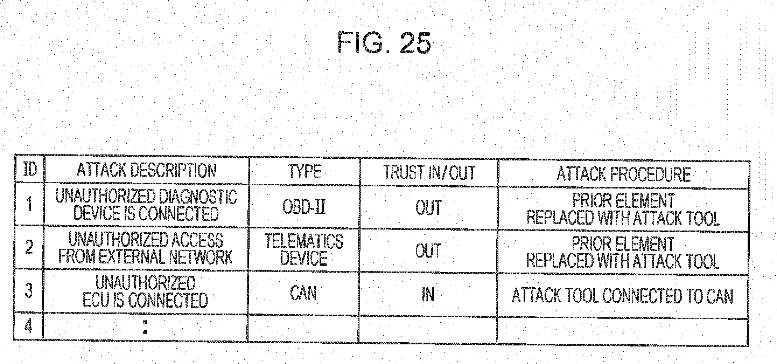

Fig. 25 is an example of the attack list data 265 according to embodiment 3. The attack list data 265, as mentioned above, is data that indicates a list of attacks on the control model 110. The attack list data 265 depicted in Fig. 25 stores the "Attack Description", "Type", "Trust In/Out", and "Attack Procedure".

It should be noted that, in the example depicted in Fig. 25, the attack having ID = 3 depicted in Fig. 24, namely "DoS attack from wireless communication network", is not included in the attack list data 265 depicted in Fig. 25. This is because the attack list creation tool unit 260, on the basis of the control model 110, has determined that the element of the "Wireless LAN" that is the "Type" having ID = 3 is not required due to not being included in the control model 110 depicted in Figs. 6 and 7.

### (Creation Processing of Attack List Creation Tool Unit 260)

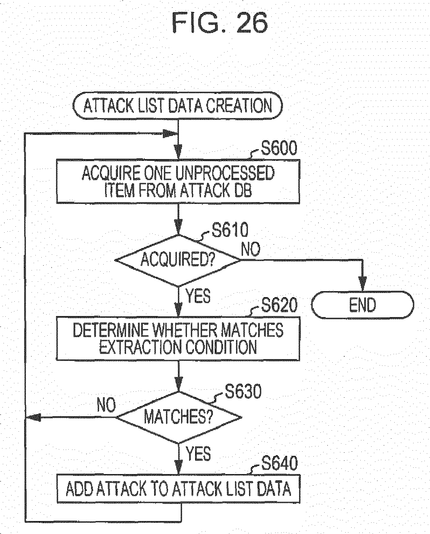

Fig. 26 is a flowchart depicting creation processing of the attack list creation tool unit 260 according to embodiment 3. The attack list creation tool unit 260 creates the attack list data 265 using the control model 110 depicted in Fig. 6, for example, and the attack DB 270 depicted in Fig. 24, for example.

As depicted in Fig. 26, first, by means of a user operation, the attack list creation tool unit 260 acquires one unprocessed item from the attacks included in the attack DB 270 (S600).

Next, the attack list creation tool unit 260 determines whether or not an unprocessed item has been acquired (S610). If an unprocessed item has not been acquired (no in S610), the attack list creation tool unit 260 terminates the processing and outputs the created attack list data 265.

On the other hand, if an unprocessed item has been acquired in S610 (yes in S610), the attack list creation tool unit 260 determines whether the "Type" of the acquired attack matches an extraction condition of being included in the elements within the control model 110 (S620), and, if matching (yes in S630), adds the attack to the attack list data 265 (S640).

More specifically, the attack list creation tool unit 260, in S620, determines whether there is an item that matches the "Type" included in the attack acquired from the attack DB 270 in S600, in the elements within the control model 110 depicted in Figs. 6 and 7. For example, in the case where ID 1 of the attack DB 270 depicted in Fig. 21 is acquired, since the "Type" of ID 1 is the OBD-II and "OBD-II" is also in the DB of the control model 110 depicted in Fig. 7, in S640, the attack of ID 1 is added to the attack list data 265.

### (Example of Control Model 110 Having an Attack Simulation Function Added Thereto)

Here, a description will be given regarding an example of the case where a function for simulating an attack is added to the control model 110 and the case where a countermeasure therefor is carried out.

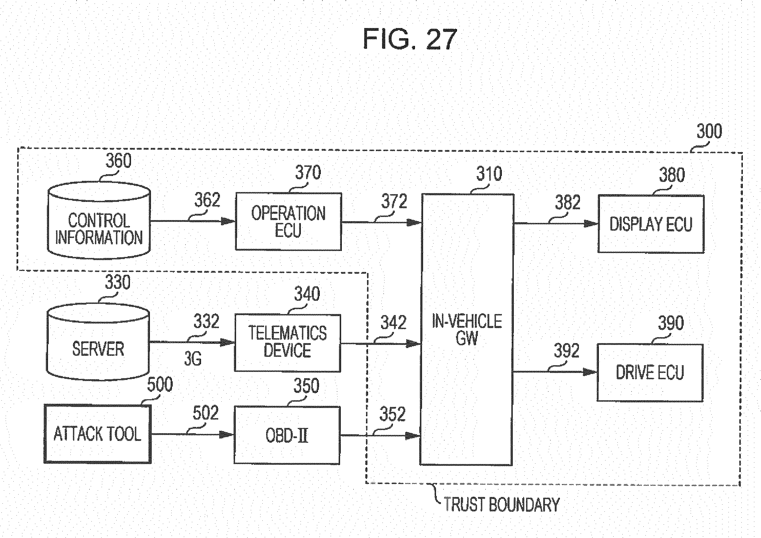

Fig. 27 is a diagram depicting an example of the control model 110 to which an attack simulation function has been added according to embodiment 3.

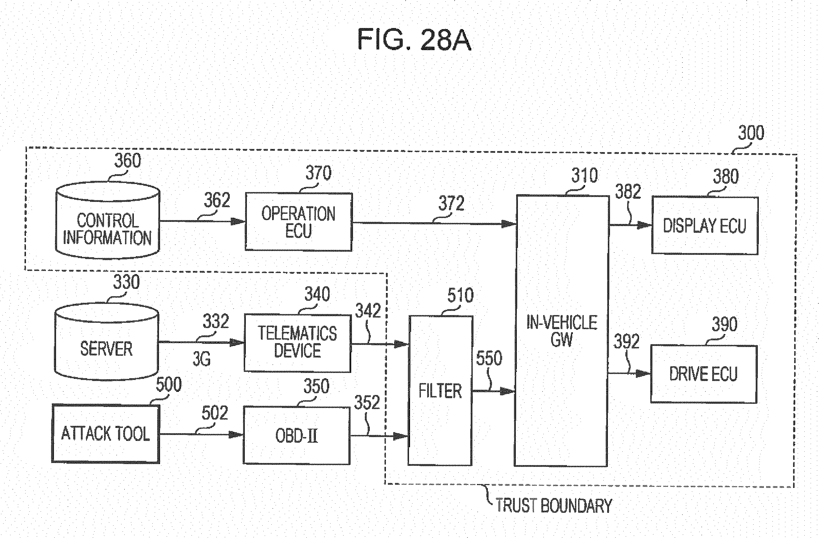

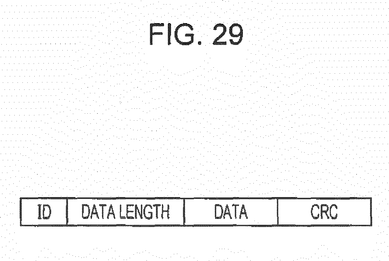

Fig. 28A is a diagram depicting an example of the case where a countermeasure is implemented on the control model 110 depicted in Fig. 27. Fig. 29 is a diagram depicting a portion of the format of a CAN message. Fig. 29 depicts only the fields relating to the present embodiment.

Fig. 27 depicts an example of the case where a function that attacks the OBD-II 350, which is one of the elements of the control model 110 depicted in Fig. 6, has been added. As depicted in Fig. 27, in the control model 110, an attack tool 500 has been added as an element that connects to the OBD-II 350. On the basis of the attack list indicated in the attack list data 265, it is possible that an unauthorized CAN message may be input to the in-vehicle LAN from the OBD-II 350 for the display ECU or the drive ECU to be operated in an unauthorized manner, and therefore the abovementioned attack tool 500 has been added.

It should be noted that, in practice, there are a plurality of sub-ECUs (not depicted) within the display ECU 380. One of the sub-ECUs of the display ECU is a communication status ECU (not depicted), which displays the communication status by means of an indicator, an LED, or the like.

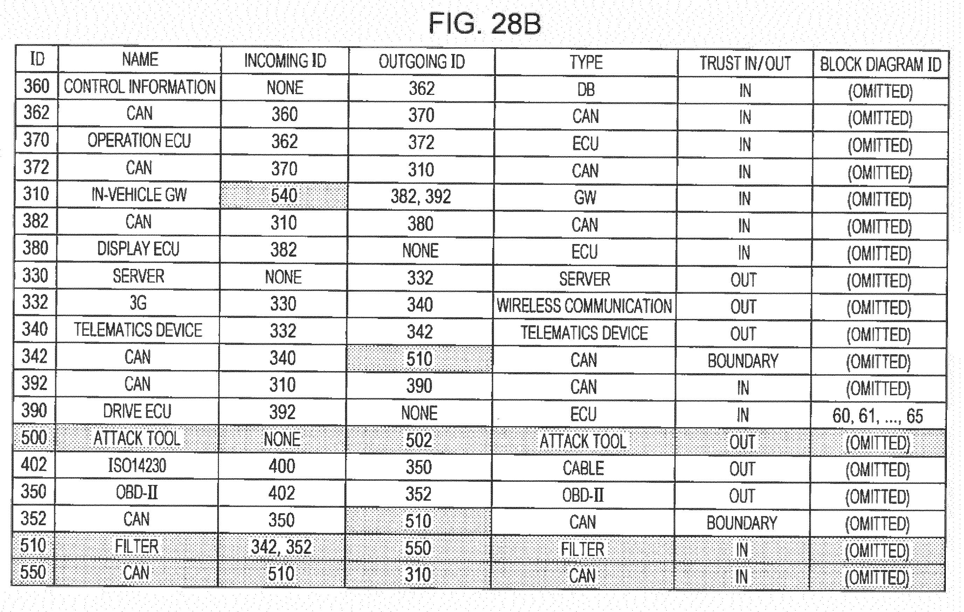

Figs. 28A and 28B depict an example in which a packet filter 510 is installed prior to the in-vehicle GW 310 as a countermeasure for the threat from the telematics device 340 and the OBD-II 350.

As mentioned above, the packet filter 510 is installed as a result of the threat analysis tool unit 200 having analyzed a threat from the threat DB 240 with respect to the control model 110 and derived a countermeasure of inserting the packet filter 510. By then installing the packet filter 510, it is possible to block an unauthorized message from outside of the trust boundary.

More specifically, in the format of the CAN message depicted in Fig. 29, the "ID" field is used to identify data content and a transmission node. The "Data" field is used to transmit data of 0 to 8 bytes in 1-byte units. The packet filter 510 is then able to determine whether to allow the CAN message to pass to the in-vehicle LAN or to block the CAN message, on the basis of the "ID" of the CAN message, namely the data content and the transmission node. That is, the packet filter 510, with respect to input from the telematics device 340 and the OBD-II 350, is able to pass only messages for legitimate ECUs such as the communication status ECU and block everything else, with the determination being made on the basis of the "ID". In this way, by installing the packet filter 510, the indicator or LED is able to correctly display a telematics communication status and a diagnostic device connection status, and unauthorized messages are blocked.

### [Summary]

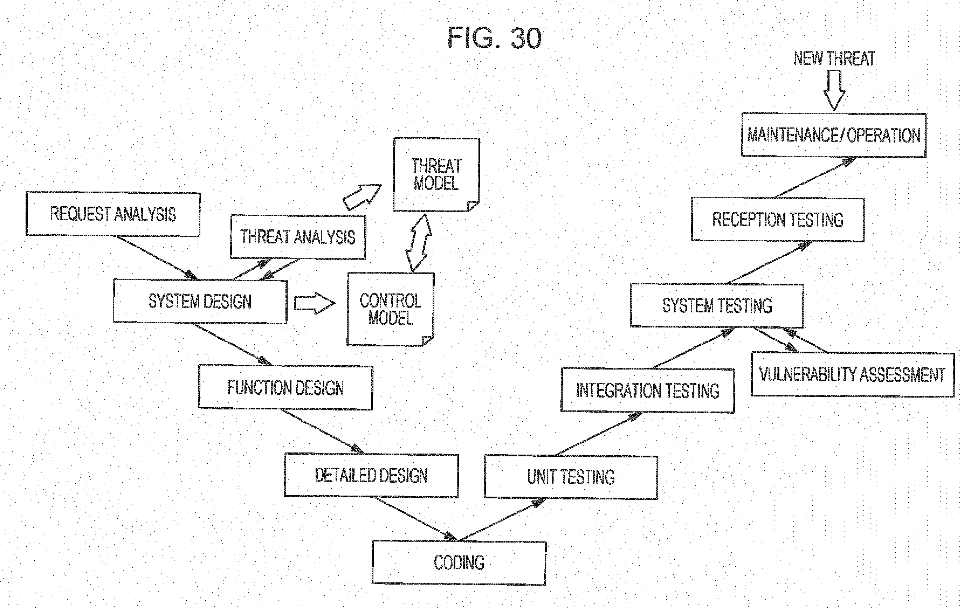

Fig. 30 is a diagram depicting a system development procedure according to a V-shaped model in embodiment 3.

In the present embodiment, due to the model-based development system 10 and a threat analysis system 20B being made to cooperate, a threat analysis is performed at an upstream stage of system development and the countermeasure list data 230 is output, and a countermeasure list indicated in the output countermeasure list data 230 is reflected in the control model 110. Furthermore, the model-based development system 10 and the simulation function adding system 26 are made to cooperate, the attack list data 265 is output, and a function is added with which an attack on the control model 110 is simulated on the basis of an attack list indicated in the attack list data 265. Thus, in the control model 110 in which countermeasures for threats have been implemented, it is possible to further assess the effect on the threats by means of a simulation. That is, it becomes possible to implement countermeasures and assessments for threats at an upstream stage of system development.

In this way, according to the software development system 1B in the present embodiment, it becomes possible to respond quickly with little refactoring, and it is possible to improve development efficiency in system development that is based on the model-based method.

Furthermore, according to the software development system 1B in the present embodiment, due to the model-based development system 10 and the threat analysis system 20B being made to cooperate, it is possible for a countermeasure for a new threat and a function that simulates an attack by that threat to be reflected in an executable control model at the system design stage, and it is therefore possible to confirm the effectiveness of a security countermeasure function upstream of the development stage. Therefore, it becomes possible to respond quickly with little refactoring.

As mentioned above, in the software development system according to the present disclosure, it is possible for a threat analysis to be performed, a countermeasure for a threat to be output, and to have a function that performs a simulation to assess a model having the countermeasure reflected therein, in an upstream stage of system development according to a model-based development method, and it is therefore possible to reduce the refactoring of work in system development.

Hereinabove, the software development system of the present disclosure has been described in embodiments 1 to 3; however, there are no particular restrictions regarding the main constituents and devices in which the processing is carried out. Processing may be carried out by a processor or the like (described hereinafter) incorporated into a specific device arranged locally. Furthermore, processing may be carried out by a cloud server or the like arranged in a place different from that of a local device.

In the abovementioned embodiments, a description has been given regarding cooperation between a model-based development system and a threat analysis system; however, it should be noted that the development system that cooperates with the threat analysis system is not restricted to a model-based development system, namely system development according to a model-based development method. If it is possible to input information instead of a control model to the threat analysis tool unit of the threat analysis system, the present disclosure may be applied to ordinary system development according to a development method such as UML instead of a model-based development system. In this case, an executable model may be described using another form of notation (state chart diagram, sequence diagram, or the like) for UML, for example, and is not restricted to a dataflow.

Furthermore, the granularity conversion unit 25 described in embodiments 1 to 3 is used to facilitate cooperation between the model-based development system and the threat analysis system, and therefore may be provided on a stand-alone basis. In other words, it is permissible to provide, on a stand-alone basis, a granularity conversion unit that has the control model created by a model-based development system input thereto, groups a plurality of elements making up the input control model in such a way that a predetermined granularity is implemented, and sets incoming/outgoing connections of a dataflow for the plurality of grouped elements to thereby output the plurality of grouped elements to the threat analysis tool unit as the individual elements of the control model.

In addition, cases such as the following may also be included in the present disclosure.
(1) Specifically, the abovementioned systems and devices are constituted by a computer system configured from a microprocessor, a ROM, a RAM, a hard disk unit, a display unit, a keyboard, a mouse, and the like. A computer program is stored in the RAM or the hard disk unit. The devices achieve the functions thereof as a result of the microprocessor operating according to the computer program. Here, in order to achieve predetermined functions, the computer program is configured with a plurality of command codes that indicate instructions for the computer being combined.
(2) Some or all of the constituent elements that make up the abovementioned systems and devices may be configured from one system large-scale integration (LSI). A system LSI is a multi-functional LSI in which a plurality of components are integrated and manufactured on one chip, and, specifically, is a computer system configured including a microprocessor, a ROM, a RAM, and the like. A computer program is stored in the RAM. The system LSI achieves the functions thereof as a result of the microprocessor operating according to the computer program.
(3) Some or all of the constituent elements that make up the aforementioned systems and devices may be configured from an IC card or an individual module that is able to be attached to and detached from the devices. The IC card or the module is a computer system configured from a microprocessor, a ROM, a RAM, and the like. The IC card or the module may include the aforementioned multi-functional LSI. The IC card or the module achieves the functions thereof as a result of the microprocessor operating according to a computer program. This IC card or this module may be tamper-resistant.
(4) Furthermore, the present disclosure may be a method given above. Furthermore, a computer program that realizes these methods by means of a computer is permissible, and a digital signal constituting the computer program is permissible.
(5) Furthermore, in the present disclosure, the computer program or the digital signal may be recorded on a computer-readable recording medium such as a flexible disk, a hard disk, a CD-ROM, an MO, a DVD, a DVD-ROM, a DVD-RAM, a BD (Blu-ray (registered trademark) disc), or a semiconductor memory, for example. Furthermore, the digital signal may be recorded on these recording mediums.

Furthermore, the present disclosure may be realized by the computer program or the digital signal being transmitted via a network represented by an electric telecommunication line, a wireless or wired telecommunication line, and the Internet, or by a data broadcast or the like.

Furthermore, the present disclosure may be a computer system provided with a microprocessor and a memory, in which the memory stores the computer program and the microprocessor operates according to the computer program.

Furthermore, the present disclosure may be carried out by another independent computer system as a result of the program or the digital signal being recorded on the recording medium and transferred, or as a result of the program or the digital signal being transferred by way of the network or the like.

The present disclosure can be used in a software development system and a program, and, in particular, can be used in a software development system and a program for a device in which security is important such as the development of an integrated system such as an in-vehicle system.

## Claims

1. A software development system comprising:
a threat database which retains data indicating one or more threats that are factors that cause risks in information security to occur; and
circuitry which, in operation, with regard to individual elements of a control model which is created from design information for a development target by a development system handling executable models and is an executable model in which the development target is simulated, extracts data of corresponding threats from the threat database to thereby create and output data for a threat list that indicates a plurality of threats for the control model.

2. The software development system according to Claim 1,
wherein the development system handling executable models is a model-based development system.

3. The software development system according to Claim 1,
wherein the circuitry
is provided with a countermeasure database that retains data of countermeasure means for each of the one or more threats,
extracts the countermeasure means for each of the plurality of threats included in the data for the threat list from the countermeasure database to thereby create and output data for a countermeasure list indicating a list of the countermeasure means for the control model, and
outputs the data for the countermeasure list to the development system handling executable models to thereby cause the development system handling executable models to reflect the countermeasure list in the control model.

4. The software development system according to Claim 3,
further comprising an attack database that retains data of one or more attacks on information security,
wherein the circuitry,
with regard to the individual elements making up the control model, extracts data of corresponding attacks from the attack database to thereby create and output data for an attack list indicating a plurality of the attacks on the control model, and
outputs the data for the attack list to the development system handling executable models to thereby cause the development system handling executable models to reflect the attack list in the contract model and perform a simulation to assess source code of the control model in which the attack list has been reflected.

5. The software development system according to Claim 1,
wherein the circuitry has the control model created by the development system handling executable models input thereto, groups a plurality of the elements making up the input control model in such a way that a predetermined granularity is implemented, and
sets incoming/outgoing connections of a dataflow for the plurality of grouped elements to thereby output the plurality of grouped elements as the individual elements of the control model.

6. The software development system according to Claim 5,
wherein the circuitry, as the predetermined granularity, groups the plurality of elements in such a way as to form a plurality of elements that are not connected to elements to be protected as information assets and a plurality of elements that are connected to the elements to be protected as the information assets.

7. The software development system according to Claim 5,
wherein the circuitry, as the predetermined granularity, groups the plurality of elements in such a way that pattern matching is performed using a design pattern corresponding to a predetermined element type, and a specific element matching the design pattern serves as a group boundary.

8. The software development system according to Claim 5,
wherein the predetermined granularity is a preset upper value for a number of times that grouping is to be performed, and
the circuitry groups a plurality of elements included in a block diagram until reaching the preset upper value for the number of times that grouping is to be performed.

9. The software development system according to Claim 1,
wherein the individual elements of the control model created by the development system handling executable models have trust boundary information indicating whether the individual elements are inside or outside of a trust boundary for security, and
the circuitry
determines whether the individual elements are inside or outside of the trust boundary, based on the trust boundary information possessed by the individual elements of the control model created by the development system handling executable models, and
uses data of the threats for the elements that are outside of the trust boundary from among the data of the corresponding threats extracted from the threat database, to create and output the data for the threat list indicating the plurality of threats for the control model.

10. The software development system according to Claim 2,
wherein the model-based development system
creates the control model from the design information,
generates source code from the created control model,
performs a simulation to assess the generated source code, and
causes the control model to be revised by feeding an assessment result for the source code back to the control model.

11. A computer-readable non-transitory recording medium having recorded thereon a program that performs a threat analysis for a control model which is created from design information for a development target by a development system handling executable models and is an executable model in which the development target is simulated,
the program, when executed by a processor, causing the processor to execute a method comprising:
with regard to individual elements of the control model created by the development system handling executable models, extracting data of corresponding threats from a threat database that retains data of one or more threats that are factors that cause risks in information security to occur, and thereby creating and outputting data for a threat list indicating a plurality of threats for the control model.

12. The non-transitory recording medium according to Claim 11,
wherein the method further comprises:
inputting of the control model created by the development system handling executable models, and grouping a plurality of the elements included in a block diagram expressing the input control model, in such a way that a predetermined granularity is implemented; and
setting incoming/outgoing connections of a dataflow for the plurality of grouped elements, and thereby outputting the plurality of grouped elements as the individual elements of the control model.

13. The non-transitory recording medium according to Claim 12,
wherein the individual elements of the control model created by the development system handling executable models have trust boundary information indicating whether the individual elements are inside or outside of a trust boundary for security, and
the method further comprises:
setting information indicating whether the individual elements are inside or outside of the trust boundary, in each of the plurality of grouped elements.

14. The non-transitory recording medium according to Claim 13,
wherein the individual elements of the control model created by the development system handling executable models have the trust boundary information indicating whether the individual elements are inside or outside of the trust boundary for security, and
the method further comprises:
acquiring the individual elements of the control model created by the development system handling executable models;
comparing the acquired individual elements of the control model and each of the one or more threats retained in the threat database to extract the data of the corresponding threats from the threat database;
determining whether the individual elements are inside or outside of the trust boundary, based on the trust boundary information possessed by the individual elements of the control model created by the development system handling executable models; and
using data of the threats for the elements that are outside of the trust boundary from among the data of the corresponding threats extracted from the threat database, to create and output the data for the threat list indicating the plurality of threats for the control model.
